# EUROPEAN PATENT APPLICATION

(11) **EP 4 755 683 A1**
(43) Date of publication of application: **10.06.2026**
(21) Application number: 25210317.1
(22) Date of filing: 22.10.2025
(51) Int. Cl.: B60K 1/04

(54) **BATTERY PACK MODULE FOR HAUL TRUCK**

(30) Priority: 01.11.2024 US 202418934913
(71) Applicant: Cummins, Inc., Columbus, Indiana 47201 (US)
(72) Inventor: Richards, Kieran J., West Haddon, NN6 7ET (GB)
(74) Representative: Cleveland Scott York

(57) **Abstract**

A battery pack module for heavy equipment vehicles, such as mining trucks, is presented herein. The battery pack module (176) may include multiple layers of battery trays (502), each tray including multiple battery packs (504). The battery pack module may further include a cooling line system and a battery cabling system that each are connected to the battery pack layers in parallel. The battery pack module may have a unibody design to reduce weight and cost of manufacturing.

## Description

### FIELD OF THE PRESENT DISCLOSURE

The present disclosure relates generally to a battery pack module for a haul truck, such as a mining truck. In particular, the present disclosure relates to a battery pack module including a unibody structure and a plurality of battery pack layers.

### BACKGROUND OF THE PRESENT DISCLOSURE

Large equipment vehicles, such as haul trucks, mining vehicles, cranes, bulldozers, etc., may require a large power source to accommodate the workload and/or sheer size of the vehicle. The large equipment vehicles may be equipped with battery packs to increase peak power output during ascending, aid in breaking, recover energy when descending, and otherwise provide power to the engine. Due to the size of large equipment vehicles, considerably large battery pack systems are necessary to operate the large equipment vehicles. The large battery pack systems necessary to accommodate the power requirements for operation may be heavy and dimensionally difficult to fit onto standard vehicle architectures.

### SUMMARY OF THE DISCLOSURE

The present disclosure provides a layered battery pack module configured for mounting on a mining truck. The layered battery pack module including: a support structure including a first support beam and a second support beam, each of the first support beam and the second support beam including a vertical portion and a horizontal portion, a distal end of the vertical portion coupled to a distal end of the horizontal portion so that the vertical portion and the horizontal portion define an angle therebetween; a first side plate coupled to the vertical portion of the first support beam and the horizontal portion of the first support beam; a second side plate coupled to the vertical portion of the second support beam and the horizontal portion of the second support beam, the second side plate being positioned opposite of the first side plate; and a plurality of battery pack layers defined between the first side plate and the second side plate. In another embodiment, the layered battery pack module further includes a plurality of battery pack trays. Each battery pack tray of the plurality of battery pack trays removably coupled to one corresponding battery pack layer of the plurality of battery pack layers. In another embodiment, each battery pack tray of the plurality of battery pack trays includes: a battery tray surface; and at least one battery pack coupled to the battery tray surface. Each battery pack tray of the plurality of battery pack trays is configured to slide onto a sliding surface of the one corresponding battery pack layer of the plurality of battery pack layers. Further, the layered battery pack module further includes a first end plate coupled to a distal end of the battery tray surface and a second end plate coupled to a proximal end of the battery tray surface such that the first end plate and the second end plate extend in a direction perpendicular to the battery tray surface. Further, each battery pack tray of the plurality of battery pack trays includes three battery packs.

In yet another embodiment, the sliding surface of each battery pack layer of the plurality of battery pack layers includes a first support rail coupled to the first side plate extending a length of the first side plate and a second support rail coupled to the second side plate opposite of and parallel to the first support rail, the second support rail extending a length of the second side plate. Further, each battery pack tray of the plurality of battery pack trays is configured to slide onto the first support rail and the second support rail of the corresponding battery pack layer of the plurality of battery pack layers. In yet another embodiment, the layered battery pack tray further includes a top stiffening tray coupled to an upper portion of each of the first side plate and the second side plate. In a different embodiment, the layered battery pack tray further includes: a first mounting pin coupled to a proximal end of the vertical portion of the first support beam; and a second mounting pin coupled to a proximal end of the vertical portion of the second support beam. In another embodiment, the layered battery pack tray further includes a back plate extending between the first side plate and the second side plate, the back plate including a mounting brace configured to couple to a lower mount of the mining truck.

In another embodiment, the plurality of battery pack layers includes seven battery pack layers. In another embodiment, each of the first side plate and the second side plate include a bottom mounting surface on a bottom portion of the first side plate and the second side plate and an upper mounting surface on an upper portion of the first side plate and the second side plate. Further, at least one of a mud flap, a water guard, and a fluid seal are removably coupled to at least one of the bottom mounting surface and the upper mounting surface. Further still, the layered battery pack module further includes a top mounting surface coupled to a top portion of each of the first side plate, the second side plate, and a back plate extending between the first side plate and the second side plate, the top portion being above each of the upper portion of the first side plate and the second side plate and an upper portion of the back plate. The layered battery pack further includes a first service access panel coupled to the first side plate; a second service access panel and a third service access panel coupled to the second side plate; a fourth service access panel coupled to a front plate of the battery pack module; and a fifth service access panel coupled to a top plate of the battery pack module, the top plate being coupled to the top mounting surface. In yet another embodiment, the layered battery pack module has a unibody design.

The present disclosure further provides a layered battery pack module configured for mounting on a mining truck. The layered battery pack module includes: a first side plate corresponding with a first side of the layered battery pack module; a second side plate corresponding with a second side of the layered battery pack module; a plurality of battery pack layers between the first side plate and the second side plate, each battery pack layer of the plurality of battery pack layers defining a sliding surface; and a plurality of battery pack trays, each battery pack tray of the plurality of battery pack trays configured to be removably received by a corresponding battery pack layer of the plurality of battery pack layers. Each battery pack tray of the plurality of battery pack trays includes: a battery tray surface; and at least one battery pack coupled to the battery tray surface.

In another embodiment, the layered battery pack module further includes a first end plate coupled to a distal end of the battery tray surface and a second end plate coupled to a proximal end of the battery tray surface such that the first end plate and the second end plate extend in a direction perpendicular to the battery tray surface. Further, the first end plate and the second end plate each include a tray lifting feature. In another embodiment, the sliding surface of each battery pack layer of the plurality of battery pack layers is defined by: a first support rail coupled to the first side plate and extending a length of the first side plate; and a second support rail coupled to the second side plate and extending a length of the second side plate.

In yet another embodiment, each battery pack tray of the plurality of battery pack trays includes a first sliding rail configured to slideably couple to the first support rail and a second sliding rail configured to slideably couple to the second support rail. In a different embodiment, each battery pack tray of the plurality of battery pack trays is configured to slide along the sliding surface of the corresponding battery pack layer in a direction away from a chassis of the mining truck. In a further embodiment, the layered battery pack module further includes a locking mechanism to hold each battery pack tray of the plurality of battery pack trays in a position relative to the corresponding battery pack layer.

In another embodiment, each battery pack tray of the plurality of battery pack trays is configured to slide into one battery pack layer of the plurality of battery pack layers. In yet another embodiment, the plurality of battery pack layers includes seven battery pack layers. In another embodiment, the plurality of battery packs includes three battery packs. In a different embodiment, the first end plate and the second end plate are coupled to the battery tray surface such that a mounting lip of the first end plate and the second end plate extends a distance parallel to the battery tray surface. In yet another embodiment, each battery pack tray of the plurality of battery pack trays includes two stiffening ridges, each stiffening ridge of the two stiffening ridges extending a length of the battery pack tray between the distal and proximal ends, wherein the two stiffening ridges are configured to reduce flexing of the battery pack. In another embodiment, the battery tray surface includes at least one opening configured to allow fluid to drain through the battery pack tray.

In another embodiment, the layered battery pack tray further includes a support structure including a first support beam and a second support beam, each of the first support beam and the second support beam including a vertical portion and a horizontal portion, wherein a distal end of the vertical portion couples to a distal end of the horizontal portion to form an angle therebetween. Further, the battery pack tray includes: a first mounting pin coupled to a proximal end of the vertical portion of the first support beam; and a second mounting pin coupled to a proximal end of the vertical portion of the second support beam.

In another embodiment, the layered battery pack module further includes: a back panel having a mounting brace; a first mounting pin coupled to the first side of the layered battery pack module; and a second mounting pin coupled to the second side of the layered battery pack module. Further, the mounting brace is configured to couple to a lower mount of the mining truck. Further still, the battery pack module is configured to be mounted to the mining truck via the mounting pins.

In another embodiment, the layered battery pack module further includes cooling lines. The cooling lines including: a primary cooling supply line, the primary cooling supply line fluidly coupled to a coolant fluid source; a primary return cooling line; and a plurality of battery pack layer cooling lines fluidly coupled to the primary supply cooling line and the primary return cooling line in parallel, each battery pack layer cooling line of the plurality of battery pack layer cooling lines corresponding to one battery pack layer of the plurality of battery pack layers. Further, each battery pack layer cooling line of the plurality of battery pack layer cooling lines includes: a layer supply line fluidly coupled to a plurality of layer supply branch lines in parallel, each layer supply branch line of the plurality of layer supply branch lines corresponding with one battery pack of the plurality of battery packs; and a layer return line fluidly coupled to a plurality of layer return branch lines in parallel, each layer return branch line of the plurality of layer return branch lines corresponding with one battery pack of the plurality of battery packs. Further still, each battery pack layer cooling line of the plurality of battery pack layer cooling lines includes: a layer supply line fluidly coupled to a plurality of layer supply branch lines in series, each layer supply branch line of the plurality of layer supply branch lines corresponding with one battery pack of the plurality of battery packs; and a layer return line fluidly coupled to a plurality of layer return branch lines in series, each layer return branch line of the plurality of layer return branch lines corresponding with one battery pack of the plurality of battery packs.

In another embodiment, the layered battery pack module further includes battery cabling lines, the battery cabling lines including: a primary cabling line; and a plurality of layer cabling lines electronically coupled to the primary cabling line in parallel. Each layer cabling line of the plurality of layer cabling lines correspond to one battery pack layer of the plurality of battery pack layers. Further, each layer cabling line of the plurality of layer cabling lines corresponds to one battery pack layer of the plurality of battery pack layers and electronically couples to one battery pack of the plurality of battery packs such that the plurality of battery packs within one common battery pack layer of the plurality of battery pack layers are connected in parallel. In another embodiment, the layered battery pack module has a unibody design.

The present disclosure also provides a layered battery pack module configured for mounting to a mining truck. The layered battery pack module includes a first support beam having a first end portion and a second end portion; a first plate coupled to the first support beam to form a first sidewall; a second plate coupled to the first support beam to form a back panel, the second plate including a mounting brace positioned nearer the second end portion of the first support beam than the first end portion of the first support beam, and the mounting brace configured to couple to a lower mount of a chassis of a vehicle; and a first pivot pin coupled to and extending from one of the first end portion of the first support beam than the second end portion of the first support beam, the first pivot pin configured to be received by a pin receiving mount of the chassis of the vehicle. In another embodiment, the layered battery pack module further includes: a second support beam having a first end portion and a second end portion, the second support beam coupled to the second plate opposite the first support beam; a third plate coupled to the second support beam to form a second sidewall; and a second pivot pin coupled to and extending from one of the first end portion of the second support beam and the third plate nearer the first end portion of the second support beam than the second end portion of the second support beam, the second pivot pin configured to be received by the pin receiving mount of the chassis of the vehicle.

In yet another embodiment, the first pivot pin extends in a generally perpendicular direction relative to the first support beam or the first plate. In another embodiment, the mounting brace is configured to removably couple to the lower mount of the chassis of the vehicle. In another embodiment, the lower mount to the chassis of the vehicle includes a vibration mitigation element.

The present disclosure further provides a vehicle having a layered battery pack module. The vehicle includes: a first wheel coupled to a first side of a chassis at a first forward position; a second wheel coupled to the first side of the chassis at a first rearward position; a support structure of a battery pack module coupled to the first side of the chassis at a position between the first wheel and the second wheel; and a vertical operating cable extending vertically along at least a portion of the first end of the battery pack module to a first access point. The battery pack module including a plurality of battery pack layers in a vertical arrangement, each battery pack layer of the plurality of battery pack layers including at least one battery pack. Each battery pack layer of the plurality of battery pack layers includes a tray operating line, each tray operating line coupled to each battery pack of the at least one battery pack of the corresponding battery pack layer, and each tray operating line extending to a first end of the battery pack module. The first access point is positioned within an access zone defined behind the first wheel.

In another embodiment, each battery pack layer includes a plurality of battery packs, and each tray operating line couples each battery pack of the plurality of battery packs of the corresponding battery pack layer in series. In a further embodiment, each battery pack layer includes a plurality of battery packs, and each tray operating line couples each battery pack of the plurality of battery packs of the corresponding battery pack layer in parallel. In yet another embodiment, each tray operating line and the vertical operating cable are electronic cabling lines. Further, each tray operating line is coupled to the vertical operating cable via a high voltage electrical interface box.

In another embodiment, the first access point is a high voltage electrical box. In yet another embodiment, the first access point is positioned on an upper mounting surface of the battery pack module. In a further embodiment, each tray operating line and the vertical operating cable are cooling lines. In another embodiment, the access point is accessible from the access zone via a removable service panel of the battery pack module.

The present disclosure provides a battery pack module for a vehicle. The battery pack module includes: a front panel; a back panel positioned opposite of the front panel; a first side panel extending between the front panel and the back panel, the first side panel having a first service access; and a plurality of battery pack layers in a vertical arrangement within the front panel. The back panel, and the first side panel, each battery pack layer of the plurality of battery pack layers including a battery pack. Each battery pack layer of the plurality of battery pack layers includes a tray operating line. The tray operating line removably coupled to the battery pack and being accessible via the first service access for disconnecting the tray operating line from the battery pack. In another embodiment, the service access is one of a door, a portal, or a flap. Further, the battery pack module further includes: a second side panel extending between the front panel and the back panel opposite the first side panel; a top panel extending between the front panel, the back panel, the first side panel, and the second side panel; and a second access corresponding with one of the front panel, the back panel, the second side panel, and the top panel. In another embodiment, the tray operating line extends to a first end of the battery pack module. Further, the battery pack module further includes a vertical operating cable extending vertically along at least a portion of the first end of the battery pack module to a third access.

In another embodiment, each battery pack layer includes a plurality of battery packs, and the tray operating line couples each battery pack of the plurality of battery packs of the corresponding battery pack layer in series. In a further embodiment, each battery pack layer includes a plurality of battery packs, and the tray operating line couples each battery pack of the plurality of battery packs of the corresponding battery pack layer in parallel.

In yet another embodiment, the tray operating line is an electronic cabling line. In another embodiment, the tray operating line includes: a layer supply branch cooling line fluidly coupled to a layer supply cooling line, the layer supply cooling line corresponding with a battery pack layer of the plurality of battery pack layers; and a layer return branch cooling line fluidly coupled to a layer return cooling line, the layer return cooling line corresponding with the battery pack layer of the plurality of battery pack layers. Further, the battery pack module includes a plurality of battery packs, a plurality of layer supply branch cooling lines, and a plurality of layer return branch cooling lines so that: each layer supply branch cooling line of the plurality of layer supply branch cooling lines corresponds with one battery pack of the plurality of battery packs; each layer return branch cooling line of the plurality of layer return branch cooling lines corresponds with one battery pack of the plurality of battery packs; the layer supply cooling line is fluidly coupled to each layer supply branch cooling line of the plurality of layer supply branch cooling lines; and the layer return cooling line is fluidly coupled to each layer return branch cooling line of the plurality of layer return branch cooling lines. Further still, the battery pack module includes: a primary cooling supply line, the primary cooling supply line fluidly coupled to a coolant fluid source and the layer supply cooling line; and a primary cooling return line, the primary cooling return line fluidly coupled to the layer supply cooling line.

The present disclosure provides a battery pack tray for a layered battery pack module. The battery pack tray includes: a tray, a first end plate, and a second end plate. The tray includes a tray surface, a distal end, and a proximal end; a first side, and a second side. The tray configured to support at least one battery pack on the tray surface, the first side including a first sliding surface, and the second side including a second sliding surface. The first end plate coupled to the distal end of the tray and extending in a direction perpendicular to the tray surface. The second end plate coupled to the proximal end of the tray. The first end plate and the second end plate each includes a stiffening lip that extends from the first end plate and the second end plate parallel to the tray surface. In another embodiment, the battery pack tray is configured to slide into a layered battery pack module on the first sliding surface and the second sliding surface. In a further embodiment, the first sliding surface is defined by a first sliding rail and the second sliding surface is defined by a second sliding rail. In yet another embodiment, each of the first end plate and the second end plate includes a tray lifting opening.

In further embodiment, the battery pack tray further includes a first stiffening ridge extending a length of the first side of the tray between the distal end of the tray and the proximal end of the tray, and a second stiffening ridge extending a length of the second side of the tray between the distal end of the tray and the proximal end of the tray. In another embodiment, the tray surface includes a first tray support joist extending between the distal end of the tray and the proximal end of the tray and a second tray support joist extending between the first side of the tray and the second side of the tray. Further, the first tray support joist and the second tray support joist define a plurality of tray surface openings, the tray surface openings configured to allow fluid to drain through the slidable battery pack tray. Further still, the first tray support joist and the second tray support joist are included in a plurality of tray support joists, the plurality of tray support joists forming a lattice structure across the tray surface.

In another embodiment, the battery pack tray further includes a cooling line mounting bracket configured to support a parallel cooling line, the parallel cooling line coupling to the at least one battery pack on the tray surface. In yet another embodiment, the battery pack tray further includes a high voltage electrical interface box configured to couple to a parallel cabling line coupled to the at least one battery pack on the tray surface.

The present disclosure also provides a layered battery pack module for a mining truck. The layered battery pack module includes a plurality of battery pack trays, a coolant line system, and a battery pack cabling system. Each battery pack tray of the plurality of battery pack trays removably coupled to a corresponding battery pack layer of a plurality of battery pack layers. Each battery pack tray of the plurality of battery pack trays including at least one battery pack. The coolant line system is configured to cool the at least one battery pack. The coolant line system including: a primary supply cooling line, the primary supply cooling line fluidly coupled to a coolant fluid source; a primary return cooling line; and a plurality of battery pack layer cooling lines fluidly coupled to the primary supply cooling line and the primary return cooling line. Each one of the plurality of battery pack layer cooling lines corresponding to one battery pack layer of the plurality of battery pack layers. The battery cabling system configured to transport current from the at least one battery pack of each battery pack layer of the plurality of battery pack layers to the mining truck. The battery cabling system including; a primary cabling line; and a plurality of layer cabling lines electronically coupled to the primary cabling line. E ach of the plurality of layer cabling lines corresponding to one battery pack layer of the plurality of battery pack layers.

In another embodiment, each battery pack layer cooling line of the plurality of battery pack layer cooling lines is fluidly coupled to the primary supply cooling line and the primary return cooling line in parallel. In yet another embodiment, each battery pack layer cooling line of the plurality of battery pack layer cooling lines is fluidly coupled to the primary supply cooling line and the primary return cooling line in series. In another embodiment, each layer cabling line of the plurality of layer cabling lines is electronically coupled to the primary cabling line in parallel. In a further embodiment, each layer cabling line of the plurality of layer cabling lines is electronically coupled to the primary cabling line in series.

In another embodiment of the battery pack module, each battery pack tray of the plurality of battery pack trays each include: a battery tray surface and a plurality of battery support joists. The tray surface defined by: a first side; a second side parallel to the first side; a distal end connecting the first side to the second side; and a proximal end connecting the first side to the second side, the proximal end spaced apart from the distal end by the first side and the second side. The plurality of support joists extending from at least one of: the first side to the second side; and the distal end to the proximal end. Further, the at least one battery pack is coupled to at least one battery support joists of the plurality of battery support joists.

In another embodiment, each battery pack layer includes a plurality of battery packs and each battery pack layer cooling line of the plurality of battery pack layer cooling lines includes: a layer supply line fluidly coupled to a plurality of layer supply branch lines in parallel, each of the plurality of layer supply branch lines corresponding with one battery pack of the plurality of battery packs; and a layer return line fluidly coupled to a plurality of layer return branch lines in parallel, each of the plurality of layer return branch lines corresponding with one battery pack of the plurality of battery packs.

In yet another embodiment, each battery pack layer includes a plurality of battery packs and each battery pack layer cooling line of the plurality of battery pack layer cooling lines includes: a layer supply line fluidly coupled to a plurality of layer supply branch lines in series, each of the plurality of layer supply branch lines corresponding with one battery pack of the plurality of battery packs; and a layer return line fluidly coupled to a plurality of layer return branch lines in series, each of the plurality of layer return branch lines corresponding with one battery pack of the plurality of battery packs. In a further embodiment, each battery pack layer includes a plurality of battery packs and each layer cabling line of the plurality of layer cabling lines electronically couples the plurality of battery packs in parallel. In another embodiment, each battery pack layer includes a plurality of battery packs and each layer cabling line of the plurality of layer cabling lines electronically couples the plurality of battery packs in series.

The present disclosure provides a method of servicing a layered battery pack module on a mining truck. The method includes: removing a first services access panel from a first side of the layered battery pack module; disconnecting a battery cabling from a high voltage electrical interface box of a first battery pack layer, which interrupts current flowing from any one battery pack of a plurality of battery packs on a battery pack tray of the first battery pack layer; removing an end service access panel from a front side of the layered battery pack module; and sliding the battery pack tray out of the layered battery pack module. In another embodiment, the method further includes uncoupling a tray locking plate from a battery pack tray end plate. In yet another embodiment, the method further includes at least one of: sliding the battery pack tray into the battery pack module; coupling a tray locking plate to a battery pack tray end plate; coupling the end service access panel to the front side of the layered battery pack module; electronically connecting the battery cabling to the high voltage electrical interface box of the first battery pack layer; and coupling the first service access panel to the first side of the layered battery pack module. In yet another embodiment, the method further includes removing a second service access panel from at least one of a second side or a top side of the layered battery pack module. In a further embodiment, sliding the battery pack tray out of the layered battery pack module includes: inserting a tool into a lifting feature on a distal end of the battery pack tray; and using the tool to slide the battery pack tray out of the battery pack module.
Features of any of the above embodiments may be provided separately or in combination with any other embodiment.

### BRIEF DESCRIPTION OF THE DRAWINGS

The above-mentioned and other features and advantages of this disclosure, and the manner of obtaining them, will become more apparent, and will be better understood by reference to the following description of the exemplary embodiments taken in conjunction with the accompanying drawings, wherein:
FIG. **1** is a schematic top-down illustration of an architecture arrangement of components of a mining truck;
FIG. **2** illustrates a schematic top-down illustration of an architecture arrangement of components of a mining truck;
FIG. **3** illustrates a top-down schematic illustration of a battery pack module relative to a chassis and a plurality of wheels of a mining truck with the plurality of wheels in a first configuration;
FIG. **4** illustrates a top-down schematic illustration of the battery pack module of FIG. 3 with the plurality of wheels in a second configuration;
FIG. **5** is a perspective view of support structures of a battery pack module of the present disclosure;
FIG. **6A** is a perspective view of side plates, support structures, and support plates of a battery pack module of the present disclosure;
FIG. **6B** is a perspective view of the battery pack module of FIG. 6A, further including support rails, an upper mounting surface, a top cover mounting surface, and a bottom mounting surface;
FIG. **7A** is a perspective view of locking plates of a battery pack module of the present disclosure;
FIG. **7B** is a perspective view of the battery pack module of FIG. **7A** with the locking plates removed and a battery tray removed from the battery pack module;
FIG. **8A** is a top perspective view a battery tray of the present disclosure;
FIG. **8B** is a bottom perspective view of the battery tray FIG. **8A****;**
FIG. **8C** is a close-up end view of the battery tray of FIGS. **8A-8B****;**
FIG. **9** is a first perspective view of an exposed first side of a battery pack module of the present disclosure;
FIG. **10** is a second perspective view the exposed first side of the battery pack module of FIG. **9****;**
FIG. **11A** is a perspective view of a first side of a battery pack module of the present disclosure;
FIG. **11B** is a perspective view of a second side of the battery pack module of FIG. **11A****;** and
FIG. **11C** is a perspective view of a third side of the battery pack module of FIGS. **11A-11B****.**

Corresponding reference characters indicate corresponding parts throughout the several views. Although the drawings represent embodiments of various features and components according to the present disclosure, the drawings are not necessarily to scale, and certain features may be exaggerated in order to better illustrate and explain the present disclosure. The exemplification set out herein illustrates an embodiment of the disclosure, and such an exemplification is not to be construed as limiting the scope of the disclosure in any manner.

### DETAILED DESCRIPTION OF THE DRAWINGS

For the purposes of promoting an understanding of the principles of the present disclosure, reference is now made to the embodiments illustrated in the drawings, which are described below. The exemplary embodiments disclosed herein are not intended to be exhaustive or to limit the disclosure to the precise form disclosed in the following detailed description. Rather, these exemplary embodiments were chosen and described so that others skilled in the art may utilize their teachings.

The terms "couples", "coupled", "coupler" and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

In some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

While the disclosure herein is provided in terms of a "mining truck", it is understood that the features described herein may apply to other vehicles, including heavy equipment such as cranes, bulldozers, excavators, etc., locomotives, and other appropriate vehicles.

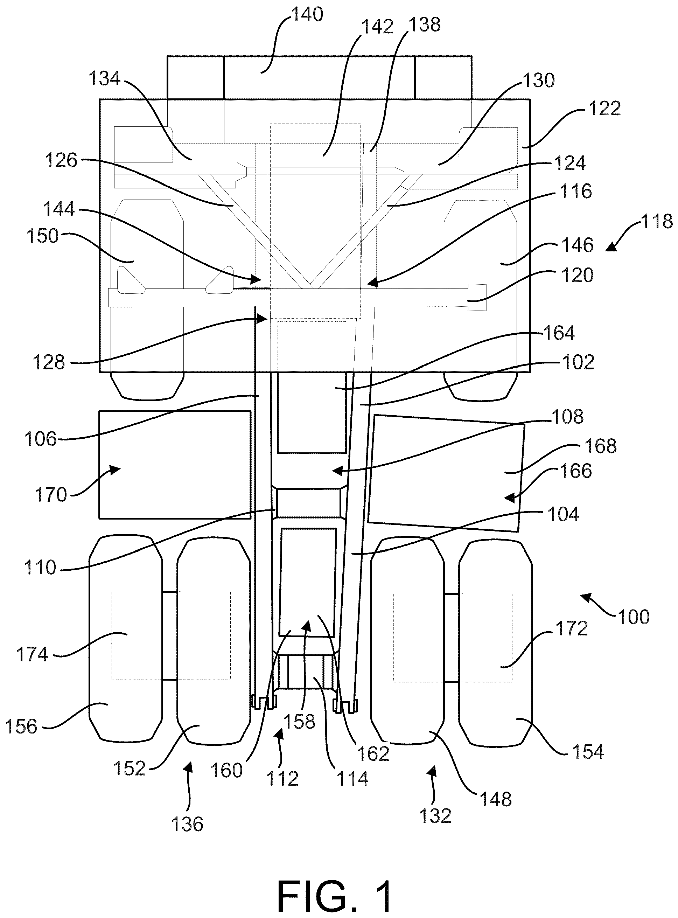

A schematic architecture of an example mining truck **100** is illustrated in FIG. **1****.** As shown, mining truck **100** may generally be built on and/or around chassis **102.** Chassis **102** may include a first frame member **104** and a second frame member **106** extending longitudinally from a first end portion of the chassis, including a first end of the chassis, to a second end portion of the chassis, including a second end of the chassis, to at least partially define a length of mining truck **100.** First frame member **104** and second frame member **106** may be spaced apart to form a space **108** therebetween, with a central crossbeam **110** extending from first frame member **104** to second frame member **106** across space **108,** generally defining a rear chassis region **112.** A rear crossbeam **114** may extend from first frame member **104** to second frame member **106** across space **108** at the rear of chassis **102,** and a horse collar **116** may connect first frame member **104** and second frame member **106** within a forward region **118** of chassis **102.**

A third frame member **120** may extend across the top of horse collar **116** and beyond the diameter of horse collar **116** to form a support for a deck **122** (FIG. **1**). A first supplemental frame member **124** and a second supplemental frame member **126** may each extend diagonally from a central portion **128** of third frame member **120** above horse collar **116** in opposite directions so that first supplemental frame member **124** may connect to a first support plate **130** and second supplemental frame member **126** may connect to a second support plate **134.** First support plate **130** may also connect to first frame member **104** on a first side **132** of chassis **102,** and second support plate **134** may also connect to second frame member **106** on a second side **136** of chassis **102.**

A forward crossbeam **138** may extend from first frame member **104** to second frame member **106** in general alignment with first support plate **130** and second support plate **134.** A support extension **140** may extend forward of forward crossbeam **138.** An engine **142** may be positioned within an opening **144** defined by horse collar **116.** A traction alternator and/or gearbox may be mounted rearward of engine **142** within area **164.**

Wheels **146, 148, 150,** and **152** may be mounted to chassis **102** via respective axles (not shown). For example, as shown, first wheel **146** may be mounted at a forward position in forward region **118** on first side **132** of chassis **102.** Second wheel **148** may be mounted at a rearward position in rear region **112** on first side **132** of chassis **102.** Third wheel **150** may be mounted at a forward position in forward region **118** on second side **136** of chassis **102.** Fourth wheel **152** may be mounted at a rearward position in rear region **112** on second side **136** of chassis **102.** In some embodiments, mining truck **100** may include a fifth wheel **154** mounted adjacent to second wheel **148** at a rearward position in rear region **112** on first side **132** of chassis **102.** Some embodiments may additionally include a sixth wheel **156** mounted adjacent to fourth wheel **152** at a rearward position in rear region **112** on second side **136** of chassis **102.** First wheel **146** and third wheel **150** may be mounted at a position generally corresponding to third frame member **102.**

A rear region space **158** defined between first frame member **104** and second frame member **106** within rear chassis region **112,** and at least partially defined between second wheel **148** and fourth wheel **152,** may be sized and shaped to receive a vehicle subsystem **160.** For example, as shown in FIG. **1****,** vehicle subsystem **160** may include an aftertreatment system **162.** In other embodiments, vehicle subsystem **160** may include a battery module, a fuel tank, a powertrain support subsystem, an exhaust muffler, an exhaust silencer, or any other vehicle subsystems necessary or otherwise desired for operation of mining truck **100.** As described herein, an exhaust muffler and an exhaust silencer may be similar or the same components intended to quiet an exhaust by some volume. In other embodiments, rear region space **158** may be free of any vehicle subsystems or components.

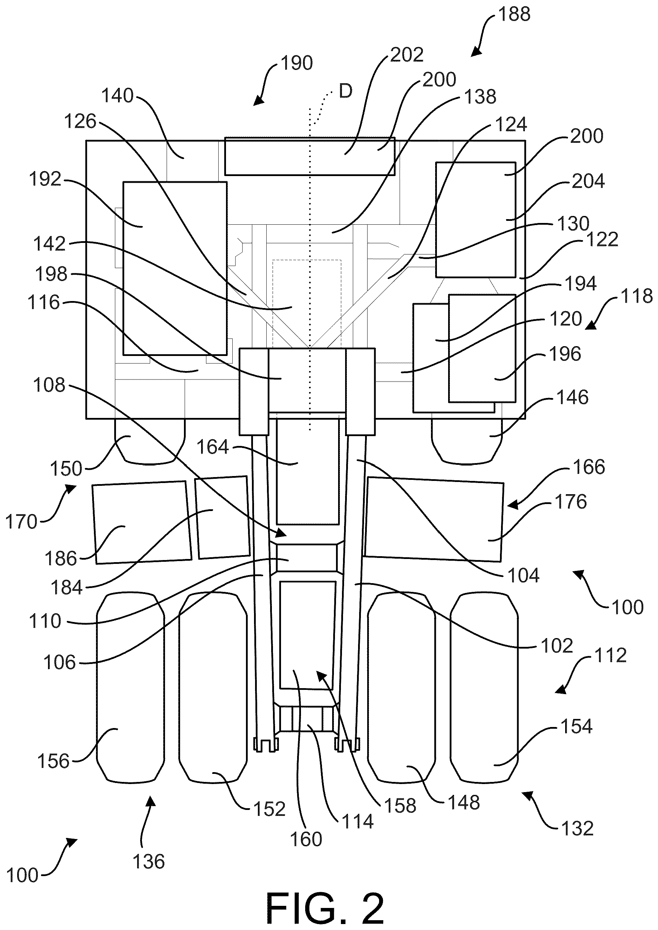

Referring additionally to FIG. **2****,** as discussed above, deck **122** may be supported at a forward position by chassis **102.** Deck **122** may include a first region **188** associated with a first side of deck **122** corresponding with first side **132** of chassis **102** and a second region **190** associated with a second side of deck **122** corresponding with second side **136** of chassis **102.** First region **188** and second region **190** are illustrated by dividing line **"D".** An operator cab **192** may be arranged within second region **190** of deck **122.** Operator cab **192** is configured to house an operator during operation of mining truck **100,** along with controls necessary or desired for said operation of mining truck **100.**

A resistor grid **194** may be arranged within first region **188** of deck **122** and may be positioned at a generally rearward position of first region **188** of deck **122.** A DC/DC system **196** may be positioned on top of resistor grid **194** so that DC/DC system **196** and resistor grid **194** are in a vertically stacked arrangement. In other embodiments, DC/DC system **196** may be positioned in a forward position relative to resistor grid **194.**

An inverter cabinet **198** may be positioned at least partially in first region **188** of deck **122** and at least partially in second region **190** of deck **122.** For example, inverter cabinet **198** may be equally positioned in first region **188** and second region **190** or, in some embodiments, be positioned so that a majority of inverter cabinet **198** is in first region **188.** In other embodiments, inverter cabinet **198** may be positioned so that a majority of inverter cabinet **198** is in second region **190.** As illustrated, inverter cabinet **198** may be positioned within a rear portion of deck **122.** The positioning of inverter cabinet **198** in this manner may provide an open area for positioning of additional mining truck components, for example.

Mining truck **100** may further include a thermal management system **200.** Thermal management system **200** may include a radiator **202** and a DC/DC-battery thermal manager **204.** In some embodiments, radiator **202** and DC/DC-battery thermal manager **204** may be integrated, i.e., one thermal management component may serve as both radiator **202** and DC/DC-battery thermal manager **204.** In other embodiments, radiator **202** may service both engine **142** and DC/DC system **196,** while battery thermal manager **204** only services battery pack module **176,** described further herein. In yet other embodiments, radiator **202** may service engine **142,** battery thermal manager **204** may service battery pack module **176,** and a third thermal manager or heat exchanger (not shown) may service DC/DC system **196.**

As illustrated, radiator **202** may be mounted to a front of mining truck **100,** or, in other words, at a full forward position relative to deck **122.** For example, radiator may be mounted at the first end portion **102** adjacent the first end of chassis **102.** In some embodiments, radiator **202** may be, at least in part, mounted to a forward edge of deck **122** so that radiator **202** extends downward from deck **122.** In other embodiments, radiator **202** may be mounted to a front of mining truck **100** below deck **122.** In yet other embodiments, radiator **202** may be mounted at another position of mining truck **100.**

DC/DC-battery thermal manager **204** may be positioned on deck **122** within first region **188** at a forward position of resistor grid **194** and/or DC/DC system **196.** DC/DC-battery thermal manager **204** may be configured to be fluidly coupled to battery pack module **176** as described further herein, to provide coolant or refrigerated liquid to battery pack module **176,** and, in some embodiments, be fluidly coupled to DC/DC system **196** to provide thermal management services to DC/DC system **196.**

The arrangement of components on the deck as described herein are exemplary in nature and may be altered within the scope of the disclosure. For example, in some embodiments, first region **188** and second region **190** may be mirrored or switched. In other embodiments, components may be moved relative to one another and/or relative to deck **122.** Positioning of the components of the deck as described herein may mitigate damage and/or poor performance from dust, dirt, mud, and/or other environmental considerations. However, other placements are within the scope of the disclosure.

Referring again to FIG. **1****,** first wheel **146** and second wheel **148** may define a space, or first side saddle **166** therebetween. In some embodiments, as illustrated, a fuel tank **168** may be mounted to chassis **102** within first side saddle **166.** Fuel tank **168** may contain, for example, diesel fuel or an alternative fuel, e.g., ammonia, methanol, ethanol, or other fuels suitable for operation of mining truck **100.** Likewise, third wheel **150** and fourth wheel **152** may define a space, or second side saddle **170.** A first wheel motor **172** may be associated with second wheel **148** and, in embodiments including a fifth wheel, fifth wheel **154.** A second wheel motor **174** may be associated with fourth wheel **152** and, in embodiments including a sixth wheel, sixth wheel **156.** In some embodiments including a fifth and/or sixth wheel, each of second wheel **148,** fourth wheel **152,** fifth wheel **154,** and sixth wheel **156** may have a separate wheel motor. In other embodiments, all of wheels **146, 148, 150, 152, 154,** and **156** or wheels **146, 148, 150, 152** or any combination thereof, may be associated with a wheel motor, whether such wheel motor is designated to a single wheel or such wheel motor is shared between two or more wheels.

Mining truck **100** may include a battery pack module **176** as illustrated in FIG. **2****.** For example, as discussed further above, mining truck **100** may include first wheel **146** mounted at a forward position in forward region **118** on first side **132** of chassis **102,** i.e., adjacent to first frame member **104** and second wheel **148** mounted at a rearward position in rear region **112** on first side **132** of chassis **102,** i.e., adjacent to first frame member **104.** First wheel **146** and second wheel **148** may be spaced apart to define first side saddle **166** therebetween. As illustrated, battery pack module **176** may be mounted to first side **132** of chassis **102** within first side saddle **166.** In other embodiments, battery pack module **176** may be mounted to chassis **102** or another component of mining truck **100.**

Battery pack module **176** may be configured to store power for use in operation of mining truck **100.** In hybrid applications, battery pack module **176** may cooperate with engine **142** to provide power to wheels **146, 148, 150, 152** and, in some embodiments, wheels **154, 156** for movement of mining truck **100.** Battery pack module **176** may be mounted within first side saddle **166** at a position which mitigates potential contact of any one of wheels **146, 148, 150, 152, 154** (when present) and/or **156** (when present).

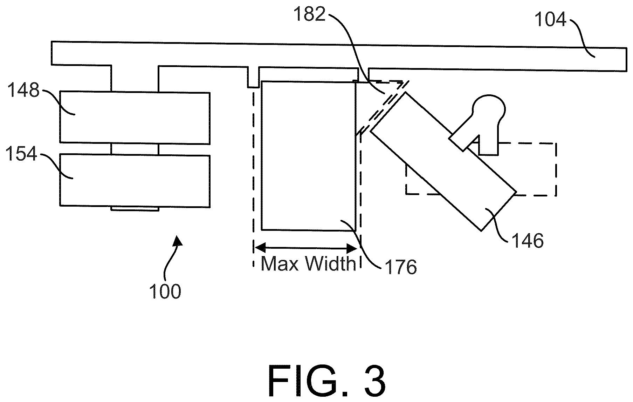

As shown in FIGS. **3-4****,** for example, battery pack module **176** may be mounted to chassis **102** in a manner that defines a forward access zone **178** defined between first wheel **146** and battery pack module **176** and a rearward access zone **180** defined between battery pack module **176** and second wheel **148.** Forward access zone **178** and rearward access zone **180** provides clearance for movement of the wheels during operation of the mining truck, and also provides clearance for an operator, mechanic, or another person to stand within the appropriate access zone **178, 180 for** access to battery pack module **176** for maintenance or other required or desired tasks.

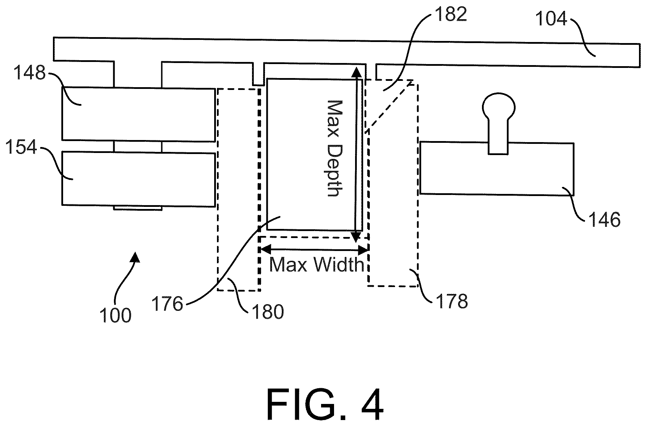

A steering zone, or additional access zone **182,** may be defined adjacent to a forward inner pocket to ensure additional clearance for the steering of first wheel **146** during operation of mining truck **100** as shown in FIG. **4****.** Additional access zone **182** may also provide additional clearance for the operator, mechanic, or another person to access battery pack module **176** for maintenance or other required or desired tasks. For example, in some embodiments, battery pack module **176** may be mounted to mining truck **100** (e.g., via chassis **102**) in a manner so that an access to battery pack module **176** is generally positioned in or adjacent to additional access zone **182.**

Referring again to FIG. **2****,** a hydraulic liquid tank **184** may be mounted to second side **136** of chassis **102** within second side saddle **170.** Hydraulic liquid tank **184** may serve as a reservoir for containing excess hydraulic fluid for operation of mining truck **100.** A second liquid tank **186** may be mounted to chassis **102** within second side saddle **170.** In some embodiments, second liquid tank **186** may be a fuel tank.

As illustrated, hydraulic liquid tank **184** may be mounted to chassis **102** at an interior position of second side saddle **170,** while second liquid tank **186** may be mounted to chassis **102** at an exterior position of second side saddle **170,** so that hydraulic liquid tank **184** is substantially in-between chassis **102** and the second liquid tank **186.** In other embodiments, hydraulic liquid tank **184** and second liquid tank **186** may be alternately arranged. For example, in some embodiments, second liquid tank **186** may be mounted to chassis **102** at an interior position of second side saddle **170,** while hydraulic liquid tank **184** may be mounted to chassis **102** at an exterior position of second side saddle **170** In yet other embodiments, hydraulic liquid tank **184** and second liquid tank **186** may both be arranged at a generally interior position of second side saddle **170** so that one of hydraulic liquid tank **184** and second liquid tank **186** is positioned at a forward position near third wheel **150,** and the other of hydraulic liquid tank **184** and second liquid tank **186** is positioned at a rearward position near fourth wheel **152.**

In some embodiments, a third liquid tank, for example, a second fuel tank, may be mounted to the chassis **102** within second side saddle **170.** In other embodiments, the second fuel tank may be mounted to chassis **102** within first side saddle **166** in tandem with battery pack module **176.**

Although the embodiments described above include mounting of battery pack module **176** within first side saddle **166** with hydraulic liquid tank **184** and second liquid tank **186** mounted within second side saddle **170,** other arrangements may be considered that also enjoy at least some of the advantages discussed above. For example, in some embodiments, battery pack module **176** may be mounted within second side saddle **170** adjacent to hydraulic liquid tank **184** while second liquid tank **186** is mounted to chassis **102** within first side saddle **166.** In other embodiments, hydraulic liquid tank **184** may remain in second side saddle **170,** second liquid tank **186** may be mounted to chassis **102** within first side saddle **166,** and battery pack module **176** may be mounted to deck **122.**

Mounting of battery pack module **176** within first side saddle **166** may facilitate an even balance of mining truck **100** when one or more tanks are also mounted to chassis **102** within second side saddle **170** defined between third wheel **150** and fourth wheel **152.** This placement may also maximize space for battery positioning while allowing the batteries to be put in a single, unified space rather than distributed in several places over the architecture of mining truck **100.** For example, in some embodiments and as described further herein, battery pack module **176** may include a plurality of battery pack layers in a vertical arrangement, where each battery pack layer of the plurality of battery pack layers includes one or more battery packs. This vertical arrangement of battery packs as positioned in a side saddle may take advantage of a height of mining truck **100** to include as many battery packs as necessary for efficient operation of mining truck **100** in a hybrid operation mode. While these benefits are acknowledged, it is also within the scope of this disclosure that battery pack module **176** and/or a plurality of battery packs may be alternately positioned, whether in a single, unified space (i.e., on deck **122,** within rear region space **158,** or another placement), or in a plurality of places throughout architecture of mining truck **100.**

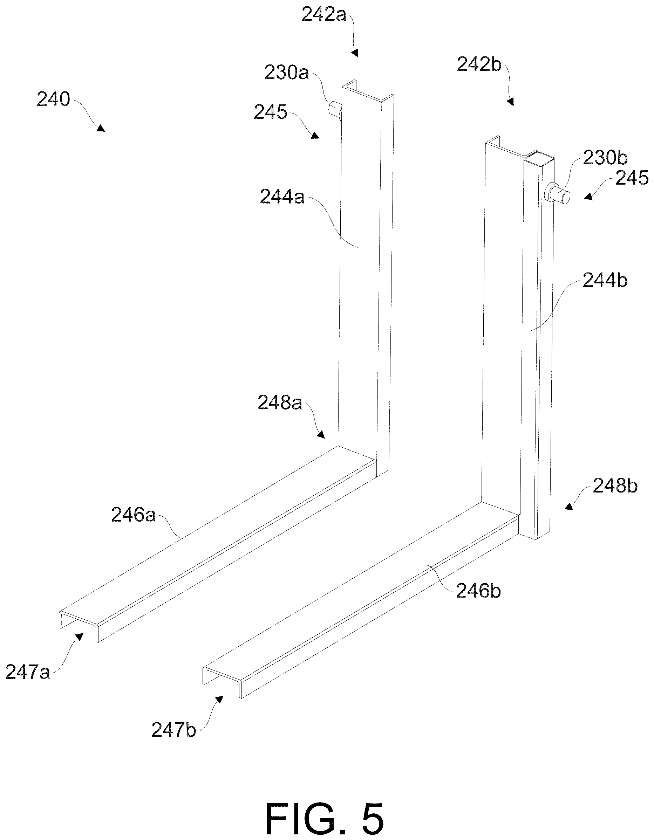

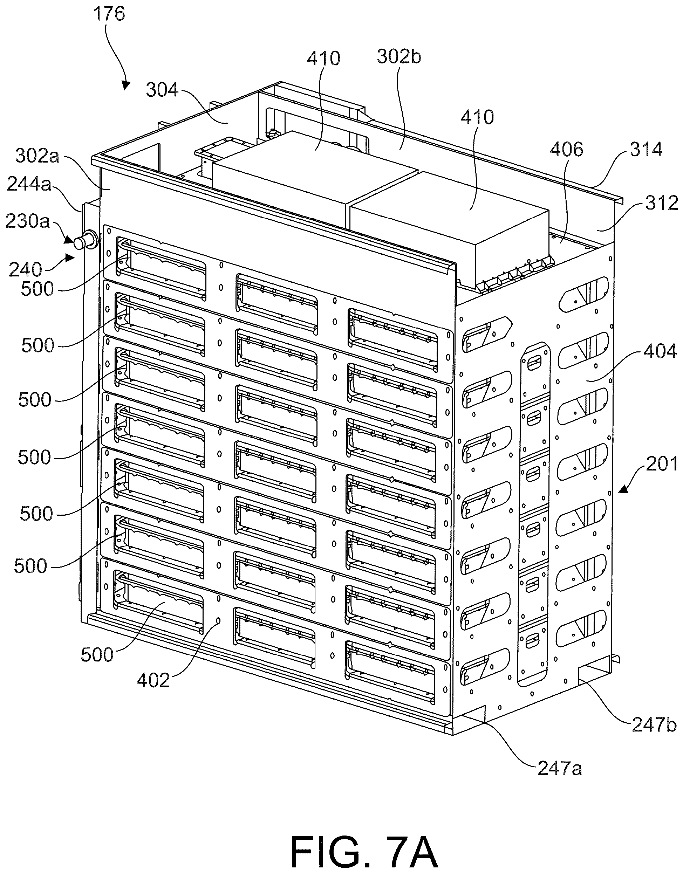

Referring to FIGS. **5-7B****,** a battery pack module **176** of the present disclosure is illustrated. Battery pack module **176** may include a unibody design. As used herein, a "unibody" describes a module in which individual components of the module come together to form the whole module, in this case, the battery pack module **176.** In some embodiments, for example, the individual components making up the unibody of the battery pack module may be separate components which are assembled to form the unibody design. As these components are fit together, battery pack module **176** is further strengthened by the addition of more components. The unibody design allows for battery pack module to be lighter and cheaper to make than traditional battery modules. Battery pack module **176** may not include a frame but rather may be made of each of the following components coupled together. However, in an alternative embodiment, battery pack module **176** may include a frame.

Referring initially to FIG. **5****,** a support structure **240** of battery pack module **176** may include a first support beam **242a** and a second support beam **242b.** In one embodiment, support beams **242a, 242b** may be shaped to accommodate forklift forks to facilitate mounting of battery pack module **176** to mining truck **100.** For example, support beams **242a, 242b** may be spaced apart a distance consistent with the spacing of forks of a forklift. In other embodiments, other lifting mechanisms consistent with the shape and size of support beams **242a, 242b** may be used to facilitate mounting of battery pack module **176** to mining truck **100.** In some embodiments, the shape and size of support beams **242a, 242b** may be altered to accommodate alternative lifting mechanisms as known in the art. In yet other embodiments, support beams **242a, 242b** may be generally shaped to accommodate a plurality of lifting mechanisms and/or lifting mechanisms which do not require a specific shape and/or size may be used to facilitate mounting of battery pack module **176** to mining truck **100.** In yet other embodiments, battery pack module **176** may be manually mounted to mining truck **100** so that no lifting mechanisms are necessary and/or support beams **242a, 242b** do not require a specific shape.

Support beams **242a, 242b** may each include a vertical portion **244a, 244b** and a horizontal portion **246a, 246b.** The horizontal portions **246a, 246b** may each include an opening **247** sized and shaped for receiving forklift forks or another lifting component of another lifting mechanism. For example, openings **247** may form pockets within horizontal portions **246a, 246b,** and/or may be open toward the bottom of horizontal portions **246a, 246b** to facilitate reception of forklift forks or other lifting tools. Support beams **242a, 242b** may be "L" shaped, or any other shape, such as a "C" shape, that suitably accommodates a lifting device to mount battery pack module **176** within side saddle **166** of mining truck **100.** As described above, in some embodiments, support beams **242a, 242b** may be otherwise sized and/or shaped to facilitate cooperation with other lifting mechanisms or, in other embodiments, have a general size and shape which is generic to a plurality of lifting mechanisms or non-specific to any lifting mechanisms. As such, in some embodiments, horizontal portions **246a, 246b** may not include any openings or pockets.

A distal end of vertical portion **244a** may meet a distal end of horizontal portion **246a** such that a coupling point **248a** is formed. Similarly, a distal end of vertical portion **244b** may meet a distal end of horizontal portion **246b** such that a coupling point **248b** is formed. Each vertical portion **244a, 244b** may be coupled to its respective horizontal portion **246a, 246b** using any coupling mechanisms known in the art. For example, each vertical portion **244a, 244b** may be coupled to its respective horizontal portion **246a, 246b** via welding, adhesive, mechanical fasteners, interference fit, locking mechanisms, bonding mechanisms, or any other coupling mechanism which facilitates operation and use of battery pack module **176** as described herein. In some embodiments, each vertical portion **244a, 244b** may be formed as a single piece with its corresponding horizontal portion **246a, 246b** via, for example, additive printing, casting, molding, or other manufacturing methods known in the art. In yet other embodiments, support structure **240** may include only horizontal portions **246a, 246b** of first and second support beams **242a, 242b.**

While support structure **240** is described above as including two support beams **242a, 242b,** in some embodiments, support structure **240** may include fewer support beams (i.e., one or none) or a greater number of support beams. In some embodiments, the included number of support beams may be positioned in a variety of arrangements consistent with the environment and use of battery pack module **176** as discussed herein. For example, in some embodiments, support structure **240** may include four support beams similar to support beams **242a, 242b** as discussed above, where the support beams are arranged so that two vertical beams extend between two horizontal beams to create two square or rectangular shape structures, e.g., so that the combination of all four support beams create a prism or cuboid shape, which may or may not include cross beams between the two square or rectangular shape structures. Other embodiments may include alternatively arranged support beams.

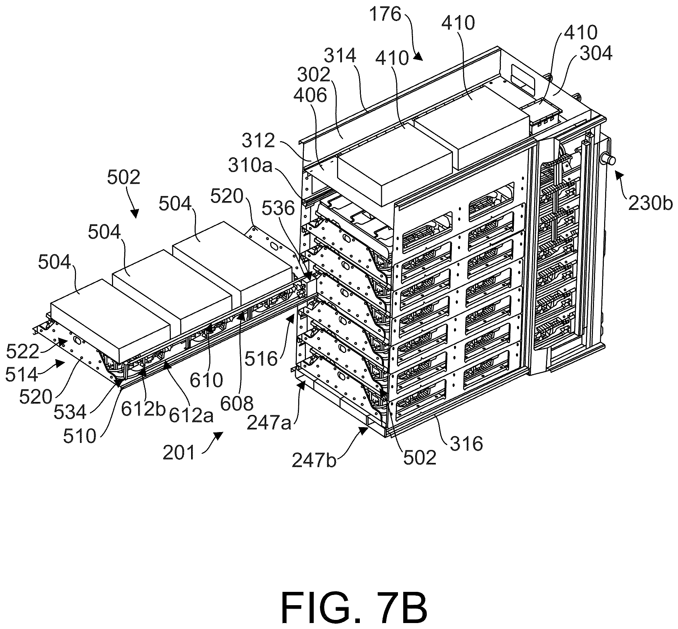

Battery pack module **176** may be removably coupled to mining truck **100** via at least one top mount and a lower mount (not shown). The top mount may include a mounting mechanism coupled to battery pack module **176;** for example, the top mount may be positioned on a back panel **208** (FIG. **7B**) or on support beams **242a, 242b** as discussed further herein. In some embodiments, the top mount may include a mounting mechanism coupled to chassis **102** of mining truck **100.** In such embodiments including the top mount being coupled to chassis **102** of mining truck **100,** battery pack module **176** may include a top mount brace configured to removably couple to the at least one top mount. The top mount may be fixedly coupled and/or integrated with underlying battery pack module **176,** chassis **102,** or other mining truck component to facilitate structural integrity for mounting of battery pack module **176.** In other embodiments, the top mount may be otherwise removably coupled to underlying battery pack module **176,** chassis **102,** or other mining truck component.

In some embodiments, battery pack module **176** may include two top mounts to couple battery pack module **176** to chassis **102.** For example, the two top mounts might include a first chassis mounting pin **230a** fixed on a top portion/proximal end **245a** of vertical portion **244a** of first support beam **242a** and a second chassis mounting pin **230b** fixed on a top portion/proximal end **245b** of vertical portion **244b** of second support beam **242b.** Each of chassis mounting pins **230a** and **230b** may extend outward from its respective support beam **242a, 242b,** i.e. in a direction away from the other support beam. In some embodiments, for example, chassis mounting pins **230a,230b** may extend in opposite directions. In some embodiments, chassis mounting pins **230a, 230b** may each extend in a generally perpendicular direction relative to its respective support beams **242a, 242b.**

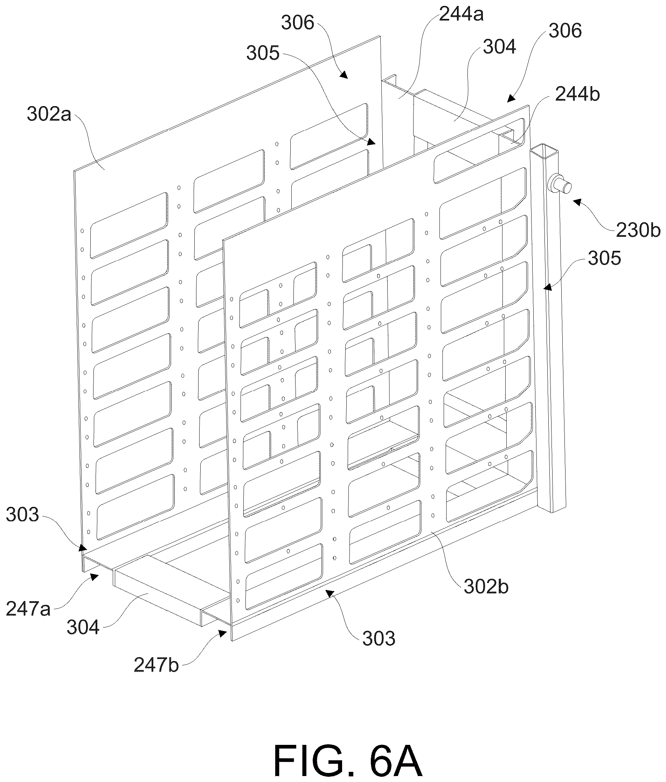

Chassis mounting pins **230a, 230b** may each be configured to be received by one or more pin receiving mounts (not shown) on chassis **102** or another component of mining truck **100.** Alternatively, chassis mounting pins **230a, 230b** may be coupled to a top portion of side plates **302a, 302b** (FIGS. **6A-6B**), discussed further below.

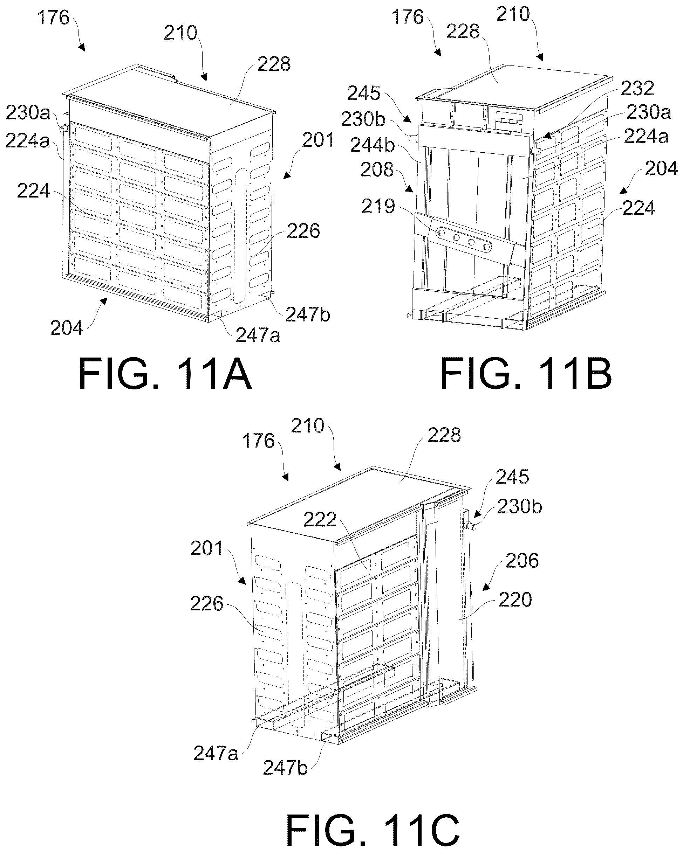

Referring briefly to FIG. **11B****,** battery pack module **176** may include a mounting brace **219** positioned on a back panel **208,** or another panel of battery pack module **176** as described further herein, which is configured to couple to the lower mount of mining truck **100** as discussed above. The lower mount (not shown) may couple to, be integrated with, and/or extend from chassis **102** of mining truck **100** and removably couple to mounting brace **219.** In some embodiments, the lower mount may include or couple to a vibration mitigation element such as a rubber disc, a spring, a torsion bar, an air bag dampener, or another vibration mitigation element. The lower mount may removably couple to mounting brace **219** such that vibration transferred from the mining truck into battery module **176** is reduced. Mounting brace **219** and/or the lower mount may be included in addition to or in alternative to the top mount (e.g., chassis mounting pins **230a, 230b**) in various embodiments.

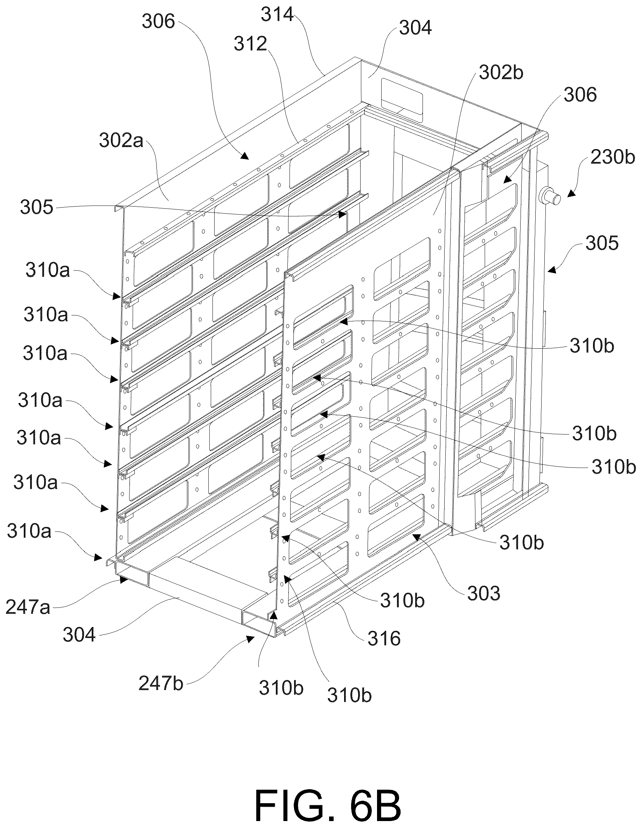

Referring now to FIGS. **6A** and **6B****,** battery pack module **176** may include a first side plate **302a** and a second side plate **302b** coupled to support structure **240.** For example, a bottom portion **303** of each side plate **302a, 302b** may attach to a length of one of horizontal portions **246a, 246b** of corresponding support beam **242a, 242b,** e.g., side plate **302a** corresponds with support beam **242a** and side plate **302b** corresponds with support beam **242b.** A side portion **305** of each side plate **302a, 302b** may attach to a length of one of vertical portions **244a, 244b** of corresponding support beam **242a, 242b.** In some embodiments, side plates **302a, 302b** may be formed of sheet metal. In some embodiments, for example, side plates **302a, 302b** may be formed of aluminum, brass, copper, steel, tin, nickel, titanium, silver, gold, platinum, or other metals suitable for the environment surrounding mining truck **100** and/or use of battery pack module **176.** In other embodiments, side plates **302a, 302b** may be formed of a polymer or other suitable material, as discussed further herein.

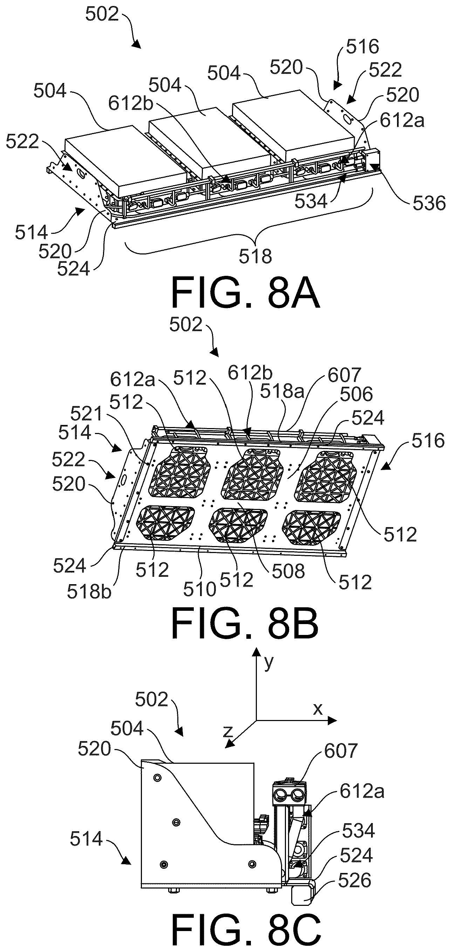

Each side plate **302a, 302b** includes a plurality of support rails **310** that extend along a length of respective side plate **302a, 302b.** For example, support rails **310** may extend horizontally and, in some embodiments, generally parallel to horizontal portions **246a, 246b** of first and second support beams **242a, 242b.** Support rails **310a** of side plate **302a** and support rails **310b** of side plate **302b** are at a similar height so that support rails **310a** and support rails **310b** may cooperate to form a layered pairs of support rails **310,** one pair at every layer height to define a plurality of battery pack layers **500** (FIGS. **8A, 8B**) as discussed further herein.

Each pair of support rails **310** are configured to receive a battery tray as discussed further below. For example, each of support rails **310a, 310b** may define a sliding surface such that each battery tray slides onto a corresponding pair of support rails to be received within battery pack module **176.** Support rails **310** may be U-channel rails, L-bracket rails, or other rails that provide a sliding surface for receiving a battery tray as described further herein.

Battery pack module **176** may include support plates **304 to** brace battery pack module **176** and facilitate structural integrity of battery pack module **176** by providing further support. For example, as illustrated, support plates **304** may include beams that extend between vertical portions **244a, 244b** and/or horizontal portions **246a, 246b** of the first and second support beams **242a, 242b.**

Still referring to FIGS. **6A-6B****,** side plates **302a, 302b** and/or support plates **304** may include an upper mounting surface **312** configured to receive a stiffening tray **406** (FIGS. **8A** and **8B**) to reinforce and reduce bending of side panels **302a, 302b.** Upper mounting surface **312** may extend a perimeter length at a top portion **306** of side plates **302a, 302b** and/or support plate **304** between vertical portions **244a, 244b** of the first and second support beams. Upper mounting surface **312** may be comprised of a support rail similar to support rails **310** or another rail or support surface coupled to an upper portion of side plates **302a, 302b** and/or support plates **304.** In other embodiments, upper mounting surface **312** may be integrally formed with side plates **302a, 302b** and/or support plate **304.**

Side plates **302a, 302b** and support plate(s) **304** may further include a top cover mounting surface **314** configured to allow for the coupling of a fifth service access panel/top cover **228** (FIGS. **11A-11C**). Top cover mounting surface **314** may extend an outer perimeter length of side plates **302a, 302b** and/or a support plate **304** between vertical portions **244a, 244b** of the first and second support beams **242a, 242b** above upper mounting surface **312.** Top cover mounting surface **314** may be a rail similar to support rails **310** or another rail coupled to a top portion of side plates **302a, 302b** and/or support plate(s) **304.** In other embodiments, top cover mounting surface **314** may be an integral extension of side plates **302a, 302b** and/or support plate(s) **304.** In yet other embodiments, top cover mounting surface **314** may be any flat surface of side plates **302a, 302b** and/or support plate(s) **304** corresponding with the top portion of side plates **302a, 302b** and/or support plate(s) **304.** In some embodiments, the structure of top cover mounting surface **314** may vary between side plates **302a, 302b** and/or support plate(s) **304.**

Side plates **302a, 302b** and/or support plate **304** may include a bottom mounting surface **316** along a lower perimeter of side plates **302a, 302b** and/or support plate **304** between vertical portions **244a, 244b** of the first and second support beams. Mud flaps, water guards, mounting guards, fluid seals and other protective components may be coupled to bottom mounting surface **316** and upper mounting surface **312** to protect battery pack module **176** from outside elements and fluids. For example, mounting guards, mud flaps, mounting guards, etc. may be coupled to upper mounting surface **312** and bottom mounting surface **316** in such a manner that the sides of battery pack module **176,** e.g., side panels **302a, 302b,** support plate **304,** and/or end locking plate **404** discussed further below, are substantially or fully covered by the protective components. In some embodiments, the protective components may also couple to battery pack module at one or more coupling points between upper mounting surface **312** and bottom mounting surface **316.**

FIGS. **7A** and **7B** illustrate the interior of battery pack module **176** and its components. For example, battery pack module **176** includes at least one battery pack layer **500** and may include a plurality of battery pack layers **500.** In some embodiments, as illustrated, battery pack module **176** includes seven battery pack layers **500.** In other embodiments, battery pack module **176** may include a greater or fewer number of battery pack layers **500,** including 1, 2, 3, 4, 5, 6, 8, 9, 10, 11, 12, 13, 14, 15, or a greater amount of battery pack layers **500** as suitable for the application of battery pack module **176** and/or the space available for mounting battery pack module **176.**

Each battery pack layer **500** may include at least one battery tray 502 with one or more battery packs **504** positioned on battery tray **502.** For example, one or more battery packs **504** may be removably coupled to each battery tray **502.** Battery trays **502** may be shaped and sized to have a width only slightly narrower than a width between side plates **302a, 302b.**

Battery trays **502** may be configured to slide onto support rails **310,** i.e., a sliding surface of a corresponding support rail **310,** such that battery trays **502** are positioned in a vertical arrangement, consistent with the arrangement of battery pack layers **500.** Each battery tray **502** may be capable of removal from battery module **176** independently from the other battery trays **502.** For example, each battery tray **502** may be independently slideable along corresponding sliding surface of corresponding support rails **310.** In some embodiments, battery trays **502** may be removable by sliding out of battery module **176** in a direction away from chassis **102** of mining truck **100** (FIG. **1**). Removal of battery trays **502** may facilitate access to battery packs **504** for servicing, replacement, or other purposes.

To maintain a position of each battery tray **502** within its corresponding battery pack layer **500,** each battery pack layer **500** may include two side locking plates **402.** For example, each battery pack layer **500** may include one side locking plate positioned on either side of battery pack layer **500** so that each side locking plate **402** is coupled to one of side plates **302a, 302b** (shown in FIG. **7A** relative to **302a,** however, it is understood that the arrangement of a side locking plate with side plate **302b** is the same or similar).

Side locking plates **402** may maintain, or lock, the battery tray **502** within corresponding battery pack layer **500** to mitigate or prevent movement of battery tray **502** during operation of mining truck **100** and/or other unintentional movement.

Each battery tray **502** may be further maintained within corresponding battery pack layer **500** by an end locking plate **404.** End locking plate **404** may extend between and/or removably couple to first side plate **302a** and second side plate **302b.** End locking plate **404** may extend vertically so that end locking plate **404** at least partially covers each battery pack layer **500** and, thereby, each battery tray **502** to mitigate or prevent unintentional sliding of battery pack layer battery trays **502** out of battery pack module **176.** In some embodiments, end locking plate **404** may additionally or alternatively removably couple to an end **514** of at least one of battery trays **502** opposite of support structure **240.** In some embodiments, end locking plate **404** may removably couple to a plurality of battery trays **502** or all of battery trays **502.**

While side locking plate(s) **402** and end locking plate(s) **404** may be utilized to hold or lock battery tray **502** in position relative to battery pack layer **500,** other embodiments may include other or alternative locking mechanisms to hold battery tray **502** in position relative to battery pack layer **500.** For example, in some embodiments, battery tray **502** may be bolted to battery pack layer **500** to hold battery tray **502** in position while maintaining the removable feature of battery tray **502.** In other embodiments, other locking mechanisms may be considered, including tab-in-groove, clips, removable adhesive, magnets, or other locking mechanisms known in the art. Such locking mechanisms may be used in conjunction with or alternatively to side end plate(s) **402** and end locking plate(s) **404.**

FIGS. **8A-8C** further illustrate battery tray **502.** Each battery tray **502** may be substantially similar to the other battery trays **502** of battery pack module **176.** As such, while a singular battery tray is discussed below, the features and characteristics discussed herein generally apply to every battery tray **502** of battery pack module **176.**

Battery tray **502** may include a tray surface **506** and an outer frame **510** that surrounds an outer perimeter of tray surface **506.** The outer perimeter of tray surface **506** may include a first side **518a,** a first end **514,** a second side **518b,** and a second end **516,** wherein first side **518a** and second side **518b** may each have a length **518,** and first end **514** and second end **516** are spaced apart by length **518.**

An end plate **520** may be coupled to each of first end **514** and second end **516.** End plate **520** may be coupled such that a mounting lip **521** extends from end plate **520** on first end **514** and/or second end **516** onto an underside of tray surface **506,** such as onto battery support joists **508** as discussed further herein. Mounting lip **521** may provide stability and structure to the tray during lifting, installation, and removal from battery pack module **176.**

End plates **520** may also include a tray lifting feature **522** configured to allow battery tray **502** to be grasped and slid out of corresponding battery pack layer **500** on support rails **310.** In one embodiment, tray lifting feature **522** may be a hole configured to receive a tool or a finger, for example, to facilitate application of force to the battery tray **502** for removal of battery tray **502** from battery pack layer **500.** End plates **520** and/or mounting lip **521** may be manufactured separately and later coupled to battery tray **502** in some embodiments. In other embodiments, end plates **520** and/or mounting lip **521** may be integrally formed with battery tray **502.**

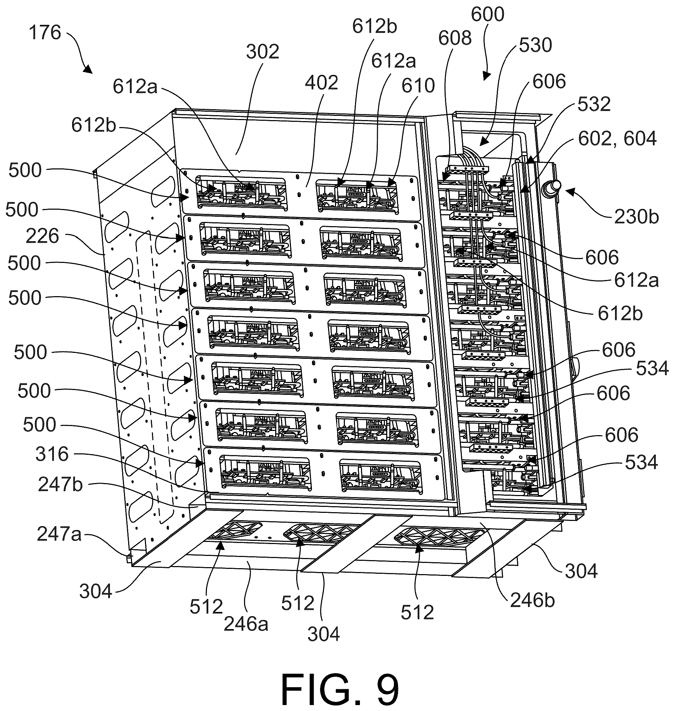

Referring now to FIG. **9B,** tray surface **506** may include a plurality of battery support joists **508.** Each of battery support joists **508** may extend between first side **518a** and second side **518b** and/or between first end **514** and second end **516** of outer frame 510 such that tray openings **512** are defined therebetween. Battery support joists **508** are configured to support one or more battery packs **504** on tray surface **506.** For example, in some embodiments, each battery pack **504** may be removably coupled to one or more battery support joists **508.** In one embodiment, battery support joists **508** may form a lattice structure.

Tray openings **512** allow for drainage of fluid through of each battery tray **502.** For example, tray openings **512** may allow flow of liquid fluid from a battery pack layer **500** toward the bottom mounting surface **316** of battery pack module **176.** Additionally, tray openings **512** allow for air to circulate through the plurality of battery pack layers **500,** facilitating temperature control of battery packs **504** by cooling the battery packs **504** on each battery tray **502.**

Each battery tray **502** may support a plurality of battery packs **504.** For example, each battery tray **502** may have a plurality of battery packs **504** removably coupled thereto, i.e., to tray surface **506** and/or battery support joists **508.** In one embodiment, each battery tray **502** may include three battery packs **504.** In other embodiments, a greater or fewer number of battery packs **504** may be included, such as 1, 2, 4, 5, 6, 7, 8, 9, 10, or greater battery packs as battery tray **502** is capable of supporting.

Now referring to FIG. **9C,** a stiffening ridge **524** may extend along at least a portion of each of first side **518a** and second side **518b** of battery tray **502.** Stiffening ridge **524** is configured to strengthen battery tray **502** to mitigate or prevent flexing of the tray along the x, y, and/or z axes during installation, use of corresponding vehicle, or removal of battery tray **502.** In some embodiments, stiffening ridge **524** of each of first side **518a** and second side **518b** may extend the entirety of length **518.** In other embodiments, stiffening ridge **524** of one of first side **518a** and second side **518b** may only extend a portion of length **518** while stiffening ridge of the other of first side **518a** and second side **518b** may extend the entirety of length **518.** In yet other embodiments, stiffening ridge **524** of each of first side **518a** and second side **518b** may only extend a portion of length **518.** In some embodiments, only one side of first side **518a** and second side **518b** may include stiffening ridge **524.** Stiffening ridge **524** may be "U" shaped, "L" shaped, or any other suitable shape that mitigates or prevents flexing of battery tray **502.** Each stiffening ridge **524** may include a sliding surface **526** configured to cooperate with support rails **310** on each of side plates **302a, 302b** to slide battery tray **502** into battery pack module **176.** Sliding surface **526** may be a flat bottom surface, an L-bracket, a U-channel, or a sliding rail, such as a nylon sliding rail.

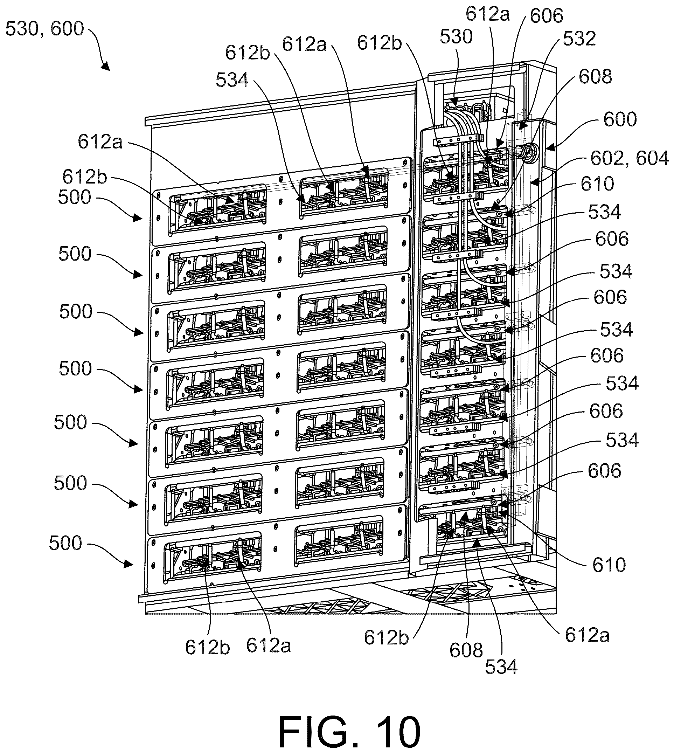

Referring additionally to FIGS. **9** and **10****,** battery pack module **176** may include cabling **530** for electronically coupling battery packs **504** together and/or to mining truck **100.** Cabling **530** may include a primary cabling line **532** and a plurality of layer cabling lines **534** - one layer cabling line **534** for each battery pack layer **500.** In some embodiments, each battery pack **504** of a corresponding battery pack layer **500** may be electronically coupled to layer cabling line **534** in parallel such that one battery pack **504** of the plurality of battery packs **504** may be removed without disrupting current flow from the remaining battery packs. In other embodiments, each battery pack **504** of a corresponding battery pack layer **500** may be electronically coupled to layer cabling line **534** in series.

Current flowing from the connected battery packs may be supplied to corresponding layer cabling line **534** and flow via layer cabling line **534** to a corresponding high voltage electrical interface box **536** at the second end **516** of battery tray **502.** Corresponding high voltage electrical interface box **536** may transmit the current from layer cabling line **534** to the primary cabling line **532.** Each corresponding layer cabling line **534** may run the entire length of corresponding battery tray **502** of its corresponding battery pack layer **500.** In other embodiments, each corresponding layer cabling line **534** may run a portion of the length of corresponding battery tray **502** of its corresponding battery pack layer **500** but defines a length which facilitates coupling of each battery pack **504.** Primary cabling line **532** may run vertically along at least a portion of a height of battery pack module **176** to facilitate coupling of each high voltage electrical interface box **536** as discussed further herein.

Primary cabling line **532** may be coupled to main battery high voltage connection boxes/low voltage system **410** located on upper mounting surface **312** (shown in FIGS. **7A-7B**). In other words, the current from battery packs **504** may flow through corresponding layer cabling line **534,** through high voltage electrical interface box **536,** into primary cabling line **532,** and to main battery high voltage connection box/low voltage system **410** to supply the mining truck with power. Primary cabling line **532** may couple to each high voltage electrical interface box **536** of each battery pack layer **500** in parallel or in series. During service of battery pack module **176,** an operator may disconnect a layer cabling line **534** from its corresponding high voltage electrical interface box **536** to ensure no current is flowing through the corresponding battery packs **504** of a corresponding battery tray **502.**

Still referring to FIGS. **9** and **10****,** battery pack module **176** may include a cooling system including cooling lines **600.** Cooling lines **600** may include a primary coolant supply line **602,** a primary coolant return line **604,** and a battery pack layer coolant line **606** at each battery pack layer **500.** Primary coolant supply line **602** may be fluidly coupled to a source of coolant fluid and supply coolant to the components of battery pack module **176** as described further herein.

For example, coolant may flow into primary supply line **602** and then into each battery pack layer **500** via battery pack layer coolant lines **606** at second end **516** of battery tray **502.** Each battery pack layer **500** may be supplied with coolant by a corresponding battery pack layer coolant line **606.** Battery pack layer coolant lines **606** may branch from primary supply line **602** such that battery pack layer coolant lines **606** are connected in parallel. In other embodiments, battery pack layer coolant lines **606** may be fluidly coupled to primary supply line **602** in series. Each battery pack layer coolant line **606** may be substantially similar to each other.

Battery pack layer coolant lines **606** may extend across second side **518b** of corresponding battery tray **502.** Battery pack layer coolant lines **606** may be supported by a layer cooling line mounting bracket **607** (FIGS. **8A-8C**) of corresponding battery tray **502.** In other embodiments, battery pack layer coolant lines **606** may extend across first side **518a.** In yet other embodiments, layer cooling line mounting bracket **607** may be coupled to first side plate **302a** or second side plate **302b** at the level of corresponding battery pack layer **500.** Other mechanisms and methods for supporting battery pack layer coolant lines **606** for the purposes further described herein may be used to facilitate coupling of battery pack layer coolant lines **606** to the necessary components of battery pack module **176** for operation as described further herein.

Battery pack layer coolant lines **606** may include a layer supply cooling line **608** and a layer return cooling line **610.** Each layer supply cooling line **608** branches off to each corresponding battery pack **504** of corresponding battery pack layer **500** via a plurality of layer supply branch cooling lines **612a** such that each battery pack **504** is connected to layer supply line **608,** i.e. each battery pack **504** may be connected to its own corresponding layer supply branch cooling line **612a.** In some embodiments, layer supply cooling line **608** may couple to battery packs **504** via layer supply branch cooling lines **612a** in parallel. In other embodiments, layer supply cooling line **608** may couple to battery packs **504** via layer supply branch cooling lines **612a** in series. Coolant may flow from the source of coolant fluid into primary cooling line **602,** each layer supply cooling line **608,** and each layer supply branch cooling line **612a** to each battery pack **504.**

The coolant cools the battery and is returned through layer return line **610.** Layer return line **610** is branched off to each corresponding battery pack **504** of corresponding battery pack layer **500** via a plurality of layer return branch cooling lines **612b** such that each battery pack **504** is connected to the layer return line **610,** i.e., each battery pack **504** may be connected to its own corresponding layer return branch cooling line **612b.** In some embodiments, layer return line **610** may couple to battery packs **504** via layer return branch cooling lines **612b** in parallel. In other embodiments, layer return line **610** may couple to battery packs **504** via layer return branch cooling lines **612b** in series. Each layer return line **610** may be fluidly coupled to primary coolant return line **604** at its corresponding battery pack layer **500** such that returned fluid may flow through layer return line **610** and into primary coolant return line **604** to be sent to a heat exchanger or other cooling mechanism and recycled back to primary coolant lines **602,** dumped, or otherwise removed from battery pack module **176.** In some embodiments, during cold operating conditions, the returned coolant may be used to heat other components of the mining truck.

As discussed above, cooling lines **600** may be connected in parallel, in series, or in combination. In embodiments including parallel connectivity, such embodiments may experience more evenly distributed coolant distribution between battery packs **504** and/or battery pack layers **500.** Such distribution may further experience a reduction in pressure loss compared to other traditional cooling systems. These features may allow for a more compact battery pack module **176.**

Now referring to FIGS. **11A-11C****,** battery pack module **176** may include a front panel **201** corresponding with a front or first side of battery pack module **176;** a back panel **208** corresponding with a back or second side of battery pack module **176;** a first sidewall panel **203** extending from front panel **201** to back panel **208** and corresponding with a third side of battery pack module **176;** a second sidewall panel **206** extending from front panel **201** to back panel **208** and corresponding with a fourth side of battery pack module **176;** and/or a fifth side, or top panel **210.** Battery pack module **176** may further include at least one service access, such as a door, portal, flap, etc., defined by or within one or more panels to allow access to the interior of battery pack module **176** as described above. For example, the service accesses as described herein may be defined by a portion of a corresponding panel (i.e., a portion of a corresponding panel may be cut out and/or covered with a flap, removable cover etc.) and/or the entirety of a corresponding panel may service as a service access.

For example, first service access **224** may be defined within or by first sidewall panel **203** of battery pack module **176** so that removal of a portion or the entirety of first sidewall panel **203** or a door, flap, etc. corresponding with first sidewall panel **203** may provide access to side plates **302a, 302b,** battery trays **502** (FIGS. **8A-8B**), layer cabling lines **534** (FIGS. **8A-10**), and/or battery pack layer cooling lines **606** (FIGS. **8A-10**) via first service access **224.**

Second service access **220** may be defined within or by second sidewall panel **206.** For example, second sidewall panel **206** may include a first portion **206a** consistent with second service access **220,** arranged so that a first edge of first portion **206a** is adjacent to an edge of back panel **208** and a second edge of first portion **206a** is adjacent to an edge of a second portion **206b** of second sidewall panel **206.** Second portion **206b** of second sidewall panel **206** may be consistent with a third service access **222** discussed further herein.

Second sidewall panel **206** may be coupled to one of side plates **302a, 302b** and is illustratively coupled to second side plate **302b.** Removal of a portion or the entirety of first portion **206a** of second sidewall panel **206** or a door, flap, etc. corresponding with first portion **206a** of second sidewall panel **206** may provide access, via second service access **220,** to battery cabling **530,** primary cabling line **532,** layer cabling lines **534,** high voltage electrical interface box **536,** cooling lines **600,** and/or battery pack layer cooling lines **606.**

Third service access **222** may, as discussed above, be defined within or by second portion **206b** of second sidewall panel **206.** Second portion **206b** of second sidewall panel **206** may be arranged so that a first edge is adjacent to an edge of front panel **201** and a second edge is adjacent to the second edge of first portion **206a** of second sidewall panel **206** as discussed above. Removal of a portion or the entirety of second portion **206b** of second sidewall panel **206** may provide access, via third service access **222,** to battery trays **502,** layer cabling lines **534,** and battery pack layer cooling lines **606.**

First service access **224** and third service access **222** may be similar in that they each provide similar access to the interior of battery pack module **176** and its components and/or contents. However, in some embodiments, third service access **222** and/or second portion **206b** of second sidewall panel **206** may be smaller in area than first service access **224** and/or first sidewall panel **203.** In other embodiments, third service access **222** and/or second portion **206b** of second sidewall panel **206** may be the same area or larger in area than first service access **224** and/or first sidewall panel **203.** For example, in some embodiments, second sidewall panel **206** may include only one portion consistent with second portion **206b** and third service access **222,** i.e., in some embodiments, second sidewall panel **206** does not include first portion **206a** or second service access **220. In** such embodiments, the components described above as accessible via second service access **220** may be accessible via third service access **222.**

Fourth service access **226** may be defined within or by front panel **201** of battery pack module **176.** Removal of a portion or the entirety of front panel **201** or a door, flap, etc. corresponding with front panel **201** may provide access, via fourth service access **226,** to end tray locking plate **404** and tray lifting feature **522** of each of battery trays **502.** Fifth service access **228** may be defined within or by top panel **210** to cover connection boxes and top stiffening tray **306.** Removal of a portion or the entirety of top panel **210** or a door, flap, etc. corresponding with top panel **210** may provide access, via fifth service access **228,** to connection boxes and top stiffening tray **306.**

While services accesses **220, 222, 224, 226,** and **228** are described herein as being associated with a particular panel and in a particular arrangement providing access to particular components ,it is understood that such description is meant only as an example and some embodiments may have alternative arrangement of accesses and panels within the spirit of the disclosure. For example, in some embodiments, each panel may include only one service access, while in other embodiments each panel may include a plurality of service accesses. In yet other embodiments, one or more panels may not include a service access.

In some embodiments, at least a portion of first portion **206a** of second sidewall panel **206** may be removed from the second side of battery pack module **176** or otherwise moved away from the second side of battery pack module **176** to expose cabling **530** and cooling lines **600,** including primary cabling line **532,** layer cabling line(s) **534,** high voltage electrical interface box(es) **536,** primary coolant supply line **602,** primary coolant return line **604,** and/or battery pack layer cooling line(s) **606.** Corresponding layer cabling line **534** of a selected battery tray layer **500** may be uncoupled from corresponding high voltage electrical interface box **536** to interrupt current flow from all of battery packs **504** corresponding with the battery pack layer **500** being serviced.

A portion of or entirety of front panel **201** may be removed from the front side of battery pack module **176** or otherwise moved away from the front side of battery pack module **176** to expose end locking plate(s) **404.** Corresponding end locking plate **404** of the battery tray **502** of the selected battery pack layer **500** may be uncoupled from battery pack module **176** to expose end plates **520** of corresponding battery tray **502.** A tool or other removal device may be inserted into tray lifting feature **522** of corresponding battery tray **502** to slide battery tray **502** at least partially out of battery pack module **176** along the sliding surface(s) of corresponding support rail(s) **310** of corresponding battery pack layer **500.** Individual battery pack(s) **504** of selected battery tray **502** may then be disconnected at the pack level and/or otherwise serviced.

Once servicing is complete, battery tray **502** may be slid back into battery pack module **176** along the sliding surface(s) of corresponding support rail(s) **310** of corresponding battery pack layer **500.** Layer cabling line **534** may then be reconnected to corresponding high voltage electrical interface box **536.** Corresponding end tray locking plate **404** may be recoupled to battery pack module **176,** and the portion or entirety of front panel **201** and/or first portion **206a** of second sidewall panel **206** may be placed back into position and coupled to battery pack module **176** where appropriate.

In some embodiments, a portion of or entirety of first sidewall panel **203,** second portion **206b** of second sidewall panel **206,** and/or top panel **210** may be removed from battery pack module **176** or otherwise moved away from the corresponding portion of battery pack module **176** to service components of battery pack module **176,** i.e., via the corresponding access as discussed above. For example, main battery high voltage connection boxes/low voltage system **410** may be accessed by removing a portion of or entirety of top panel **210** and/or otherwise moving a portion of or entirety of top panel **210** away from the top of battery pack module **176.**

While this disclosure has been described as having an exemplary design, the present disclosure may be further modified within the spirit and scope of this disclosure. This application is therefore intended to cover any variations, uses, or adaptations of the disclosure using its general principles. For example, features of any of the embodiments may be provided in combination with any other embodiment. Further, this application is intended to cover such departures from the present disclosure as come within known or customary practices in the art to which this disclosure pertains.

### ASPECTS

Aspect 1 is a layered battery pack module configured for mounting on a mining truck, the layered battery pack module comprising: a support structure comprising a first support beam and a second support beam, each of the first support beam and the second support beam comprising a vertical portion and a horizontal portion, a distal end of the vertical portion coupled to a distal end of the horizontal portion so that the vertical portion and the horizontal portion define an angle therebetween; a first side plate coupled to the vertical portion of the first support beam and the horizontal portion of the first support beam; a second side plate coupled to the vertical portion of the second support beam and the horizontal portion of the second support beam, the second side plate being positioned opposite of the first side plate; and a plurality of battery pack layers defined between the first side plate and the second side plate.

Aspect 2 is the layered battery pack module of Aspect 1, further comprising a plurality of battery pack trays, each battery pack tray of the plurality of battery pack trays removably coupled to one corresponding battery pack layer of the plurality of battery pack layers.

Aspect 3 is the layered battery pack module of Aspect 2, wherein each battery pack tray of the plurality of battery pack trays comprises: a battery tray surface; and at least one battery pack coupled to the battery tray surface; wherein each battery pack tray of the plurality of battery pack trays is configured to slide onto a sliding surface of the one corresponding battery pack layer of the plurality of battery pack layers.

The Aspect 4 is the layered battery pack module of Aspect 3, further comprising a first end plate coupled to a distal end of the battery tray surface and a second end plate coupled to a proximal end of the battery tray surface such that the first end plate and the second end plate extend in a direction perpendicular to the battery tray surface.

Aspect 5 is the layered battery pack module of any one of Aspects 3-4, wherein the sliding surface of each battery pack layer of the plurality of battery pack layers comprises a first support rail coupled to the first side plate extending a length of the first side plate and a second support rail coupled to the second side plate opposite of and parallel to the first support rail, the second support rail extending a length of the second side plate.

Aspect 6 is the layered battery pack module of any one of Aspects 1-5, further comprising a top stiffening tray coupled to an upper portion of each of the first side plate and the second side plate.

Aspect 7 is the layered battery pack module of any one of Aspects 1-6, further comprising: a first mounting pin coupled to a proximal end of the vertical portion of the first support beam; and a second mounting pin coupled to a proximal end of the vertical portion of the second support beam.

Aspect 8 is the layered battery pack module of any one of Aspects 1-7, further comprising a back plate extending between the first side plate and the second side plate, the back plate including a mounting brace configured to couple to a lower mount of the mining truck.

Aspect 9 is a layered battery pack module configured for mounting on a mining truck, the layered battery pack module comprising: a first side plate corresponding with a first side of the layered battery pack module; a second side plate corresponding with a second side of the layered battery pack module; a plurality of battery pack layers between the first side plate and the second side plate, each battery pack layer of the plurality of battery pack layers defining a sliding surface; and a plurality of battery pack trays, each battery pack tray of the plurality of battery pack trays configured to be removably received by a corresponding battery pack layer of the plurality of battery pack layers; wherein each battery pack tray of the plurality of battery pack trays comprises: a battery tray surface; and at least one battery pack coupled to the battery tray surface.

Aspect 10 is the layered battery pack module of Aspect 9, further comprising a first end plate coupled to a distal end of the battery tray surface and a second end plate coupled to a proximal end of the battery tray surface such that the first end plate and the second end plate extend in a direction perpendicular to the battery tray surface.

Aspect 11 is the layered battery pack module of Aspect 10, wherein the first end plate and the second end plate each include a tray lifting feature.

Aspect 12 is the layered battery pack module of any one of Aspects 10-11, wherein the sliding surface of each battery pack layer of the plurality of battery pack layers is defined by: a first support rail coupled to the first side plate and extending a length of the first side plate; and a second support rail coupled to the second side plate and extending a length of the second side plate.

Aspect 13 is the layered battery pack module of Aspect 12, wherein each battery pack tray of the plurality of battery pack trays includes a first sliding rail configured to slideably couple to the first support rail and a second sliding rail configured to slideably couple to the second support rail.

Aspect 14 is the layered battery pack module of any one of Aspects 9-13, wherein each battery pack tray of the plurality of battery pack trays is configured to slide along the sliding surface of the corresponding battery pack layer in a direction away from a chassis of the mining truck.

Aspect 15 is the layered battery pack module of any one of Aspects 9-14, further including a locking mechanism to hold each battery pack tray of the plurality of battery pack trays in a position relative to the corresponding battery pack layer.

Aspect 16 is a layered battery pack module configured for mounting to a mining truck, the layered battery pack module comprising: a first support beam having a first end portion and a second end portion; a first plate coupled to the first support beam to form a first sidewall; a second plate coupled to the first support beam to form a back panel, the second plate including a mounting brace positioned nearer the second end portion of the first support beam than the first end portion of the first support beam, and the mounting brace configured to couple to a lower mount of a chassis of a vehicle; and a first pivot pin coupled to and extending from one of the first end portion of the first support beam than the second end portion of the first support beam, the first pivot pin configured to be received by a pin receiving mount of the chassis of the vehicle.

Aspect 17 is the layered battery pack module of Aspect 16, further comprising: a second support beam having a first end portion and a second end portion, the second support beam coupled to the second plate opposite the first support beam; a third plate coupled to the second support beam to form a second sidewall; and a second pivot pin coupled to and extending from one of the first end portion of the second support beam and the third plate nearer the first end portion of the second support beam than the second end portion of the second support beam, the second pivot pin configured to be received by the pin receiving mount of the chassis of the vehicle.

Aspect 18 is the layered battery pack module of any one of Aspects 16-17, wherein the first pivot pin extends in a generally perpendicular direction relative to the first support beam or the first plate.

Aspect 19 is the layered battery pack module of any one of Aspects 16-18, wherein the mounting brace is configured to removably couple to the lower mount of the chassis of the vehicle.

Aspect 20 is the layered battery pack module of any one of Aspects 16-19, wherein the lower mount to the chassis of the vehicle includes a vibration mitigation element.

Aspect 21 is the layered battery pack module of any one of Aspects 1-8, wherein the plurality of battery pack layers includes seven battery pack layers.

Aspect 22 is the layered battery pack module of Aspect 3, wherein each battery pack tray of the plurality of battery pack trays includes three battery packs.

Aspect 23 is the layered battery pack module of Aspect 5, wherein each battery pack tray of the plurality of battery pack trays is configured to slide onto the first support rail and the second support rail of the corresponding battery pack layer of the plurality of battery pack layers.

Aspect 24 is the layered battery pack module of any one of Aspects 1-8, wherein each of the first side plate and the second side plate include a bottom mounting surface on a bottom portion of the first side plate and the second side plate and an upper mounting surface on an upper portion of the first side plate and the second side plate.

Aspect 25 is the layered battery pack module of Aspect 24, wherein at least one of a mud flap, a water guard, and a fluid seal are removably coupled to at least one of the bottom mounting surface and the upper mounting surface.

Aspect 26 is the layered battery pack module of any one of Aspects 24-25, further comprising a top mounting surface coupled to a top portion of each of the first side plate, the second side plate, and a back plate extending between the first side plate and the second side plate, the top portion being above each of the upper portion of the first side plate and the second side plate and an upper portion of the back plate.

Aspect 27 is the layered battery pack module of Aspect 26, further comprising: a first service access panel coupled to the first side plate; a second service access panel and a third service access panel coupled to the second side plate; a fourth service access panel coupled to a front plate of the battery pack module; and a fifth service access panel coupled to a top plate of the battery pack module, the top plate being coupled to the top mounting surface.

Aspect 28 is the layered battery pack module of any one of Aspects 1-8, wherein the layered battery pack module has a unibody design.

Aspect 29 is the layered battery pack module of any one of Aspects 9-15, wherein each battery pack tray of the plurality of battery pack trays is configured to slide into one battery pack layer of the plurality of battery pack layers.

Aspect 30 is the layered battery pack module of any of Aspects 9-15, wherein the plurality of battery pack layers includes seven battery pack layers.

Aspect 31 is the layered battery pack module of any of Aspect 9-15, wherein the plurality of battery packs includes three battery packs.

Aspect 32 is the layered battery pack module of any of Aspects 9-15, wherein the first end plate and the second end plate are coupled to the battery tray surface such that a mounting lip of the first end plate and the second end plate extends a distance parallel to the battery tray surface.

Aspect 33 is the layered battery pack module of any of Aspects 9-15, wherein each battery pack tray of the plurality of battery pack trays includes two stiffening ridges, each stiffening ridge of the two stiffening ridges extending a length of the battery pack tray between the distal and proximal ends, wherein the two stiffening ridges are configured to reduce flexing of the battery pack.

Aspect 34 is the layered battery pack module of any of Aspects 9-15, wherein the battery tray surface comprises at least one opening configured to allow fluid to drain through the battery pack tray.

Aspect 35 is the layered battery pack module of any of Aspects 9-15, further comprising a support structure including a first support beam and a second support beam, each of the first support beam and the second support beam comprising a vertical portion and a horizontal portion, wherein a distal end of the vertical portion couples to a distal end of the horizontal portion to form an angle therebetween.

Aspect 36 is the layered battery pack module of Aspect 35, further comprising: a first mounting pin coupled to a proximal end of the vertical portion of the first support beam; and a second mounting pin coupled to a proximal end of the vertical portion of the second support beam.

Aspect 37 is the layered battery pack module of any of Aspects 9-15, further comprising: a back panel having a mounting brace; a first mounting pin coupled to the first side of the layered battery pack module; and a second mounting pin coupled to the second side of the layered battery pack module.

Aspect 38 is the layered battery pack module of Aspect 37, wherein the mounting brace is configured to couple to a lower mount of the mining truck.

Aspect 39 is the layered battery pack module of any one of Aspects 36-38, wherein the battery pack module is configured to be mounted to the mining truck via the mounting pins.

Aspect 40 is the layered battery pack module of any of Aspects 9-15, further comprising cooling lines, the cooling lines including: a primary cooling supply line, the primary cooling supply line fluidly coupled to a coolant fluid source; a primary return cooling line; and a plurality of battery pack layer cooling lines fluidly coupled to the primary supply cooling line and the primary return cooling line in parallel, each battery pack layer cooling line of the plurality of battery pack layer cooling lines corresponding to one battery pack layer of the plurality of battery pack layers.

Aspect 41 is the layered battery pack module of Aspect 40, wherein each battery pack layer cooling line of the plurality of battery pack layer cooling lines comprises: a layer supply line fluidly coupled to a plurality of layer supply branch lines in parallel, each layer supply branch line of the plurality of layer supply branch lines corresponding with one battery pack of the plurality of battery packs; and a layer return line fluidly coupled to a plurality of layer return branch lines in parallel, each layer return branch line of the plurality of layer return branch lines corresponding with one battery pack of the plurality of battery packs.

Aspect 42 is the layered battery pack module of Aspect 40, wherein each battery pack layer cooling line of the plurality of battery pack layer cooling lines comprises: a layer supply line fluidly coupled to a plurality of layer supply branch lines in series, each layer supply branch line of the plurality of layer supply branch lines corresponding with one battery pack of the plurality of battery packs; and a layer return line fluidly coupled to a plurality of layer return branch lines in series, each layer return branch line of the plurality of layer return branch lines corresponding with one battery pack of the plurality of battery packs.

Aspect 43 is the layered battery pack module of any of Aspects 9-15, further comprising battery cabling lines, the battery cabling lines comprising: a primary cabling line; a plurality of layer cabling lines electronically coupled to the primary cabling line in parallel, each layer cabling line of the plurality of layer cabling lines correspond to one battery pack layer of the plurality of battery pack layers.

Aspect 44 is the layered battery pack module of Aspect 43, wherein each layer cabling line of the plurality of layer cabling lines corresponds to one battery pack layer of the plurality of battery pack layers and electronically couples to one battery pack of the plurality of battery packs such that the plurality of battery packs within one common battery pack layer of the plurality of battery pack layers are connected in parallel.

Aspect 45 is the layered battery pack module of any of Aspects 9-15, wherein the layered battery pack module has a unibody design.

Aspect 46 is a vehicle having a layered battery pack module, the vehicle comprising: a first wheel coupled to a first side of a chassis at a first forward position; a second wheel coupled to the first side of the chassis at a first rearward position; a support structure of a battery pack module coupled to the first side of the chassis at a position between the first wheel and the second wheel, the battery pack module including a plurality of battery pack layers in a vertical arrangement, each battery pack layer of the plurality of battery pack layers including at least one battery pack, wherein each battery pack layer of the plurality of battery pack layers includes a tray operating line, each tray operating line coupled to each battery pack of the at least one battery pack of the corresponding battery pack layer, and each tray operating line extending to a first end of the battery pack module; and a vertical operating cable extending vertically along at least a portion of the first end of the battery pack module to a first access point; wherein the first access point is positioned within an access zone defined behind the first wheel.

Aspect 47 is the vehicle of Aspect 46, wherein each battery pack layer includes a plurality of battery packs, and each tray operating line couples each battery pack of the plurality of battery packs of the corresponding battery pack layer in series.

Aspect 48 is the vehicle of Aspect 46, wherein each battery pack layer includes a plurality of battery packs, and each tray operating line couples each battery pack of the plurality of battery packs of the corresponding battery pack layer in parallel.

Aspect 49 is the vehicle of any one of Aspects 46-48, wherein each tray operating line and the vertical operating cable are electronic cabling lines.

Aspect 50 is the vehicle of Aspect 49, wherein each tray operating line is coupled to the vertical operating cable via a high voltage electrical interface box.

Aspect 51 is the vehicle of any one of Aspects 56-50, wherein the first access point is a high voltage electrical box.

Aspect 52 is the vehicle of any one of Aspects 46-51, wherein the first access point is positioned on an upper mounting surface of the battery pack module.

Aspect 53 is the vehicle of any one of Aspects 46-49, wherein each tray operating line and the vertical operating cable are cooling lines.

Aspect 54 is the vehicle of any one of Aspects 46-53, wherein the access point is accessible from the access zone via a removable service panel of the battery pack module.

Aspect 55 is a battery pack module for a vehicle, the battery pack module comprising: a front panel; a back panel positioned opposite of the front panel; a first side panel extending between the front panel and the back panel, the first side panel having a first service access; and a plurality of battery pack layers in a vertical arrangement within the front panel, the back panel, and the first side panel, each battery pack layer of the plurality of battery pack layers including a battery pack, wherein each battery pack layer of the plurality of battery pack layers includes a tray operating line, the tray operating line removably coupled to the battery pack and being accessible via the first service access for disconnecting the tray operating line from the battery pack.

Aspect 56 is the battery pack module of Aspect 55, wherein the service access is one of a door, a portal, or a flap.

Aspect 57 is the battery pack module of either Aspect 55 or Aspect 56, further comprising: a second side panel extending between the front panel and the back panel opposite the first side panel; a top panel extending between the front panel, the back panel, the first side panel, and the second side panel; and a second access corresponding with one of the front panel, the back panel, the second side panel, and the top panel.

Aspect 58 is the battery pack module of any one of Aspects 55-57, wherein the tray operating line extends to a first end of the battery pack module.

Aspect 59 is the battery pack module of Aspect 58, further comprising a vertical operating cable extending vertically along at least a portion of the first end of the battery pack module to a third access.

Aspect 60 is the battery pack module of any one of Aspects 55-59, wherein each battery pack layer includes a plurality of battery packs, and the tray operating line couples each battery pack of the plurality of battery packs of the corresponding battery pack layer in series.

Aspect 61 is the battery pack module of any one of Aspects 55-59, wherein each battery pack layer includes a plurality of battery packs, and the tray operating line couples each battery pack of the plurality of battery packs of the corresponding battery pack layer in parallel.

Aspect 62 is the battery pack module of any one of Aspects 55-61, wherein the tray operating line is an electronic cabling line.

Aspect 63 is the battery pack module of any one of Aspects 55-61, wherein the tray operating line includes: a layer supply branch cooling line fluidly coupled to a layer supply cooling line, the layer supply cooling line corresponding with a battery pack layer of the plurality of battery pack layers; and a layer return branch cooling line fluidly coupled to a layer return cooling line, the layer return cooling line corresponding with the battery pack layer of the plurality of battery pack layers.

Aspect 64 is the battery pack of Aspect 63, wherein the battery pack layer includes a plurality of battery packs, a plurality of layer supply branch cooling lines, and a plurality of layer return branch cooling lines so that: each layer supply branch cooling line of the plurality of layer supply branch cooling lines corresponds with one battery pack of the plurality of battery packs; each layer return branch cooling line of the plurality of layer return branch cooling lines corresponds with one battery pack of the plurality of battery packs; the layer supply cooling line is fluidly coupled to each layer supply branch cooling line of the plurality of layer supply branch cooling lines; and the layer return cooling line is fluidly coupled to each layer return branch cooling line of the plurality of layer return branch cooling lines.

Aspect 65 is the battery pack module of either Aspect 63 or Aspect 64, further comprising: a primary cooling supply line, the primary cooling supply line fluidly coupled to a coolant fluid source and the layer supply cooling line; and a primary cooling return line, the primary cooling return line fluidly coupled to the layer supply cooling line.

Aspect 66 is a battery pack tray for a layered battery pack module, the battery pack tray comprising: a tray, the tray comprising a tray surface, a distal end, a proximal end, a first side, and a second side, the tray configured to support at least one battery pack on the tray surface, the first side comprising a first sliding surface, and the second side comprising a second sliding surface; a first end plate coupled to the distal end of the tray and extending in a direction perpendicular to the tray surface; and a second end plate coupled to the proximal end of the tray; wherein the first end plate and the second end plate each comprise a stiffening lip that extends from the first end plate and the second end plate parallel to the tray surface.

Aspect 67 is the battery pack tray of Aspect 66, wherein the battery pack tray is configured to slide into a layered battery pack module on the first sliding surface and the second sliding surface.

Aspect 68 is the battery pack tray of either Aspect 66 or Aspect 67, wherein the first sliding surface is defined by a first sliding rail and the second sliding surface is defined by a second sliding rail.

Aspect 69 is the battery pack tray of any one of Aspects 66-68, wherein each of the first end plate and the second end plate comprise a tray lifting opening.

Aspect 70 is the battery pack tray of any one of Aspects 66-69, further comprising a first stiffening ridge extending a length of the first side of the tray between the distal end of the tray and the proximal end of the tray, and a second stiffening ridge extending a length of the second side of the tray between the distal end of the tray and the proximal end of the tray.

Aspect 71 is the battery pack tray of any one of Aspects 66-70, wherein the tray surface comprises a first tray support joist extending between the distal end of the tray and the proximal end of the tray and a second tray support joist extending between the first side of the tray and the second side of the tray.

Aspect 72 is the battery pack tray of Aspect 71, wherein the first tray support joist and the second tray support joist define a plurality of tray surface openings, the tray surface openings configured to allow fluid to drain through the slidable battery pack tray.

Aspect 73 is the battery pack tray of either Aspect 71 or Aspect 72, wherein the first tray support joist and the second tray support joist are included in a plurality of tray support joists, the plurality of tray support joists forming a lattice structure across the tray surface.

Aspect 74 is the battery pack tray of any one of Aspects 66-73, further comprising a cooling line mounting bracket configured to support a parallel cooling line, the parallel cooling line coupling to the at least one battery pack on the tray surface.

Aspect 75 is the battery pack tray of any one of Aspects 66-74, further comprising a high voltage electrical interface box configured to couple to a parallel cabling line coupled to the at least one battery pack on the tray surface.

Aspect 76 is a battery pack module for a mining truck, the layered battery pack module comprising: a plurality of battery pack trays, each battery pack tray of the plurality of battery pack trays removably coupled to a corresponding battery pack layer of a plurality of battery pack layers, each battery pack tray of the plurality of battery pack trays including at least one battery pack; a coolant line system configured to cool the at least one battery pack, the coolant line system comprising: a primary supply cooling line, the primary supply cooling line fluidly coupled to a coolant fluid source; a primary return cooling line; and a plurality of battery pack layer cooling lines fluidly coupled to the primary supply cooling line and the primary return cooling line, each one of the plurality of battery pack layer cooling lines corresponding to one battery pack layer of the plurality of battery pack layers; and a battery cabling system configured to transport current from the at least one battery pack of each battery pack layer of the plurality of battery pack layers to the mining truck, the battery cabling system comprising; a primary cabling line; and a plurality of layer cabling lines electronically coupled to the primary cabling line, each of the plurality of layer cabling lines corresponding to one battery pack layer of the plurality of battery pack layers.

Aspect 77 is the layered battery pack module of Aspect 76, wherein each battery pack layer cooling line of the plurality of battery pack layer cooling lines is fluidly coupled to the primary supply cooling line and the primary return cooling line in parallel.

Aspect 78 is the layered battery pack module of Aspect 76, wherein each battery pack layer cooling line of the plurality of battery pack layer cooling lines is fluidly coupled to the primary supply cooling line and the primary return cooling line in series.

Aspect 79 is the layered battery pack module of any one of Aspects 76-78, wherein each layer cabling line of the plurality of layer cabling lines is electronically coupled to the primary cabling line in parallel.

Aspect 80 is the layered battery pack module of any one of Aspects 76-78, wherein each layer cabling line of the plurality of layer cabling lines is electronically coupled to the primary cabling line in series.

Aspect 81 is the layered battery pack module of any one of Aspects 76-80, wherein each battery pack tray of the plurality of battery pack trays each comprise: a battery tray surface, the tray surface defined by: a first side; a second side parallel to the first side; a distal end connecting the first side to the second side; and a proximal end connecting the first side to the second side, the proximal end spaced apart from the distal end by the first side and the second side; and a plurality of battery support joists, the plurality of support joists extending from at least one of: the first side to the second side; and the distal end to the proximal end.

Aspect 82 is the layered battery pack module of Aspect 81, wherein the at least one battery pack is coupled to at least one battery support joists of the plurality of battery support joists.

Aspect 83 is the layered battery pack module of any one of Aspects 76-82, wherein each battery pack layer includes a plurality of battery packs and each battery pack layer cooling line of the plurality of battery pack layer cooling lines comprises: a layer supply line fluidly coupled to a plurality of layer supply branch lines in parallel, each of the plurality of layer supply branch lines corresponding with one battery pack of the plurality of battery packs; and a layer return line fluidly coupled to a plurality of layer return branch lines in parallel, each of the plurality of layer return branch lines corresponding with one battery pack of the plurality of battery packs.

Aspect 84 is the layered battery pack module of any one of Aspects 76-82, wherein each battery pack layer includes a plurality of battery packs and each battery pack layer cooling line of the plurality of battery pack layer cooling lines comprises: a layer supply line fluidly coupled to a plurality of layer supply branch lines in series, each of the plurality of layer supply branch lines corresponding with one battery pack of the plurality of battery packs; and a layer return line fluidly coupled to a plurality of layer return branch lines in series, each of the plurality of layer return branch lines corresponding with one battery pack of the plurality of battery packs.

Aspect 85 is the layered battery pack module of any one of Aspects 76-84, wherein each battery pack layer includes a plurality of battery packs and each layer cabling line of the plurality of layer cabling lines electronically couples the plurality of battery packs in parallel.

Aspect 86 is the layered battery pack module of any one of Aspects 76-84, wherein each battery pack layer includes a plurality of battery packs and each layer cabling line of the plurality of layer cabling lines electronically couples the plurality of battery packs in series.

Aspect 87 is a method of servicing a layered battery pack module on a mining truck, the method comprising: removing a first services access panel from a first side of the layered battery pack module; disconnecting a battery cabling from a high voltage electrical interface box of a first battery pack layer, which interrupts current flowing from any one battery pack of a plurality of battery packs on a battery pack tray of the first battery pack layer; removing an end service access panel from a front side of the layered battery pack module; and sliding the battery pack tray out of the layered battery pack module.

Aspect 88 is the method of Aspect 87, further comprising uncoupling a tray locking plate from a battery pack tray end plate.

Aspect 89 is the method of either Aspect 87 or Aspect 88, further comprising at least one of: sliding the battery pack tray into the battery pack module; coupling a tray locking plate to a battery pack tray end plate; coupling the end service access panel to the front side of the layered battery pack module; electronically connecting the battery cabling to the high voltage electrical interface box of the first battery pack layer; and coupling the first service access panel to the first side of the layered battery pack module.

Aspect 90 is the method of any one of Aspects 87-89, further comprising removing a second service access panel from at least one of a second side or a top side of the layered battery pack module.

Aspect 91 is the method of any one of Aspects 87-90, wherein sliding the battery pack tray out of the layered battery pack module comprises: inserting a tool into a lifting feature on a distal end of the battery pack tray; and using the tool to slide the battery pack tray out of the battery pack module.

Features of any of the above aspects may be provided in combination with any other aspect.

## Claims

1. A layered battery pack module (176) configured for mounting on a mining truck (100), the layered battery pack module comprising:
a support structure (240) comprising a first support beam (242a) and a second support beam (242b), each of the first support beam and the second support beam comprising a vertical portion and a horizontal portion, a distal end of the vertical portion coupled to a distal end of the horizontal portion so that the vertical portion and the horizontal portion define an angle therebetween;
a first side plate (302a) coupled to the vertical portion of the first support beam and the horizontal portion of the first support beam;
a second side plate (302b) coupled to the vertical portion of the second support beam and the horizontal portion of the second support beam, the second side plate being positioned opposite of the first side plate; and
a plurality of battery pack layers (500) defined between the first side plate and the second side plate.

2. The layered battery pack module of claim 1, further comprising a plurality of battery pack trays (502), each battery pack tray of the plurality of battery pack trays removably coupled to one corresponding battery pack layer of the plurality of battery pack layers.

3. The layered battery pack module of claim 2, wherein each battery pack tray of the plurality of battery pack trays comprises:
a battery tray surface; and
at least one battery pack coupled to the battery tray surface;
wherein each battery pack tray of the plurality of battery pack trays is configured to slide onto a sliding surface of the one corresponding battery pack layer of the plurality of battery pack layers.

4. The layered battery pack module of claim 3, further comprising a first end plate coupled to a distal end of the battery tray surface and a second end plate coupled to a proximal end of the battery tray surface such that the first end plate and the second end plate extend in a direction perpendicular to the battery tray surface.

5. The layered battery pack module of claim 3 or 4, wherein the sliding surface of each battery pack layer of the plurality of battery pack layers comprises a first support rail coupled to the first side plate extending a length of the first side plate and a second support rail coupled to the second side plate opposite of and parallel to the first support rail, the second support rail extending a length of the second side plate.

6. The layered battery pack module of any of the preceding claims, further comprising a top stiffening tray coupled to an upper portion of each of the first side plate and the second side plate.

7. The layered battery pack module of any of the preceding claims, further comprising:
a first mounting pin coupled to a proximal end of the vertical portion of the first support beam; and
a second mounting pin coupled to a proximal end of the vertical portion of the second support beam.

8. The layered battery pack module of any of the preceding claims, further comprising a back plate extending between the first side plate and the second side plate, the back plate including a mounting brace configured to couple to a lower mount of the mining truck.

9. A layered battery pack module configured for mounting on a mining truck, the layered battery pack module comprising:
a first side plate (302a) corresponding with a first side of the layered battery pack module;
a second side plate (302b) corresponding with a second side of the layered battery pack module;
a plurality of battery pack layers (500) between the first side plate and the second side plate, each battery pack layer of the plurality of battery pack layers defining a sliding surface; and
a plurality of battery pack trays (502), each battery pack tray of the plurality of battery pack trays configured to be removably received by a corresponding battery pack layer of the plurality of battery pack layers;
wherein each battery pack tray of the plurality of battery pack trays comprises:
a battery tray surface; and
at least one battery pack coupled to the battery tray surface.

10. The layered battery pack module of claim 9, further comprising a first end plate coupled to a distal end of the battery tray surface and a second end plate coupled to a proximal end of the battery tray surface such that the first end plate and the second end plate extend in a direction perpendicular to the battery tray surface, wherein, optionally, the first end plate and the second end plate each include a tray lifting feature.

11. The layered battery pack module of claim 10, wherein the sliding surface of each battery pack layer of the plurality of battery pack layers is defined by:
a first support rail coupled to the first side plate and extending a length of the first side plate; and
a second support rail coupled to the second side plate and extending a length of the second side plate;
wherein, optionally, each battery pack tray of the plurality of battery pack trays includes a first sliding rail configured to slideably couple to the first support rail and a second sliding rail configured to slideably couple to the second support rail.

12. The layered battery pack module of any of claims 9-11, wherein:
each battery pack tray of the plurality of battery pack trays is configured to slide along the sliding surface of the corresponding battery pack layer in a direction away from a chassis of the mining truck; and/or
the layered battery pack module further comprises a locking mechanism to hold each battery pack tray of the plurality of battery pack trays in a position relative to the corresponding battery pack layer.

13. A layered battery pack module configured for mounting to a mining truck, the layered battery pack module comprising:
a first support beam having a first end portion and a second end portion;
a first plate coupled to the first support beam to form a first sidewall;
a second plate coupled to the first support beam to form a back panel, the second plate including a mounting brace positioned nearer the second end portion of the first support beam than the first end portion of the first support beam, and the mounting brace configured to couple to a lower mount of a chassis of a vehicle; and
a first pivot pin coupled to and extending from one of the first end portion of the first support beam than the second end portion of the first support beam, the first pivot pin configured to be received by a pin receiving mount of the chassis of the vehicle.

14. The layered battery pack module of claim 13, further comprising:
a second support beam having a first end portion and a second end portion, the second support beam coupled to the second plate opposite the first support beam;
a third plate coupled to the second support beam to form a second sidewall; and
a second pivot pin coupled to and extending from one of the first end portion of the second support beam and the third plate nearer the first end portion of the second support beam than the second end portion of the second support beam, the second pivot pin configured to be received by the pin receiving mount of the chassis of the vehicle.

15. The layered battery pack module of claim 13 or 14, wherein:
the first pivot pin extends in a generally perpendicular direction relative to the first support beam or the first plate; and/or
wherein the mounting brace is configured to removably couple to the lower mount of the chassis of the vehicle; and/or
wherein the lower mount to the chassis of the vehicle includes a vibration mitigation element.
